# EUROPEAN PATENT SPECIFICATION

(11) **EP 2 763 347 B1**
(45) Date of publication and mention of the grant of the patent: **23.09.2015**
(21) Application number: 13153481.0
(22) Date of filing: 31.01.2013
(51) Int. Cl.: H04L 9/32

(54) **Physical unclonable function**
Physikalische nicht klonbare Funktion
Fonction physique inclonable

(43) Date of publication of application: 06.08.2014
(73) Proprietor: Fraunhofer-Gesellschaft zur Förderung der angewandten Forschung e.V., 80686 München (DE)
(72) Inventor: Merli, Dominik, 80809 München (DE); Schuster, Dieter, 82256 Fürstenfeldbruck (DE)
(74) Representative: Schenk, Markus

(56) References cited:
- WO-A2-2012/069545
- QINGQING CHEN ET AL: "The Bistable Ring PUF: A new architecture for strong Physical Unclonable Functions", HARDWARE-ORIENTED SECURITY AND TRUST (HOST), 2011 IEEE INTERNATIONAL SYMPOSIUM ON, IEEE, 5 June 2011 (2011-06-05), pages 134-141, XP031894838, DOI: 10.1109/HST.2011.5955011 ISBN: 978-1-4577-1059-9
- EDWARD SUH G ET AL: "Physical Unclonable Functions for Device Authentication and Secret Key Generation", 2007 44TH ACM/IEEE DESIGN AUTOMATION CONFERENCE : SAN DIEGO, CA, 4 - 8 JUNE 2007, IEEE, PISCATAWAY, NJ, 1 June 2007 (2007-06-01), pages 9-14, XP031183294, ISBN: 978-1-59593-627-1
- QINGQING CHEN ET AL: "Characterization of the bistable ring PUF", DESIGN, AUTOMATION&TEST IN EUROPE CONFERENCE&EXHIBITION (DATE), 2012, IEEE, 12 March 2012 (2012-03-12), pages 1459-1462, XP032320845, DOI: 10.1109/DATE.2012.6176596 ISBN: 978-1-4577-2145-8
- JONATHAN PETIT ET AL: "On the potential of PUF for pseudonym generation in vehicular networks", VEHICULAR NETWORKING CONFERENCE (VNC), 2012 IEEE, IEEE, 14 November 2012 (2012-11-14), pages 94-100, XP032309142, DOI: 10.1109/VNC.2012.6407450 ISBN: 978-1-4673-4995-6

## Description

Embodiments of the present invention relate to a PUF (Physical Unclonable Function), specifically to a PUF comprising a bistable ring of a plurality of inverter stages. Further embodiments relate to a method for obtaining a response from a PUF comprising a bistable ring of a plurality of inverter stages in response to a challenge. Some embodiments relate to a twisted bistable ring PUF.

PUFs are modules comprising a challenge-response (input/output) interface. Depending on the challenge and on the internal physical structure, a device-specific response is generated. The internal physical structure is influenced by random process variations during production. Consequently, each PUF is unique and exhibits an individual challenge-response behavior. PUFs are frequently also referred to as "fingerprint/biometry" for objects.

PUFs are mainly used on ASICs (Applications Specific Integrated Circuits) and FPGAs (Field Programmable Gate Arrays) for two cases of application. First, for authenticating a microchip by means of a challenge-response behavior without any cryptographic algorithms. Second, for generating a secret key for integrated circuits which are produced in CMOS (Complementary Metal Oxide Semiconductor) technology and must do without any non-volatile memory.

In order to use PUFs for challenge-response authentication, their behavior must exhibit high complexity and good statistical distribution while being stable and easy to evaluate.

It has already been shown that some PUFs proposed so far may be modeled with mechanical learning methods [U. Ruhrmair, F. Sehnke, J. Solter, G. Dror, S. Devadas, and J. Schmidhuber. Modeling attacks on physical unclonable functions. In Proceedings of the 17th ACM conference on Computer and communications security, CCS '10, pages 237-249, New York, NY, USA, 2010. ACM]. The reason for this is their linear or insufficient nonlinear behavior.

In the following, three common architectures for providing challenge-response authentication on the basis of PUFs are considered, namely the arbiter PUF architecture, the bistable ring PUF architecture and the glitch PUF architecture.

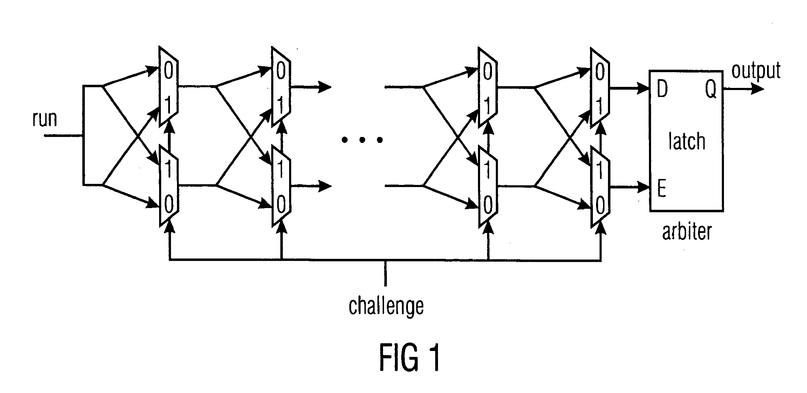

Fig. 1 shows a block diagram of a common arbiter PUF. The arbiter PUF architecture [B. Gassend, D. Clarke, M. van Dijk, and S. Devadas. Silicon physical random functions. In CCS '02: Proceedings of the 9th ACM conference on Computer and communications security, pages 148-160, New York, NY, USA, 2002. ACM] was published in 2002 and consists of two paths of delay elements. Each delay element has an individual, random time delay. The difference in run times of the paths determines whether the response will be 0 or 1. With each challenge bit, a decision is made, for the associated portion, as to whether the paths run straight or cross each other, as is shown in Fig. 1. This results in a large number of possible combinations, which may be measured.

Since, mathematically speaking, the arbiter PUF architecture is a comparison of two sums (addition of run times), it exhibits a very linear behavior. Several nonlinear extensions have already been proposed [J.-W. Lee, D. Lim, B. Gassend, G. E. Suh, M. van Dijk, and S. Devadas. A technique to build a secret key in integrated circuits with identification and authentication applications. In IEEE VLSI Circuits Symposium, New-York, June 2004], [B. Gassend, D. Lim, D. Clarke, M. van Dijk, and S. Devadas. Identification and authentication of integrated circuits. Concurrency and Computation: Practice and Experience, 16(11):1077-1098, 2004], [D. Lim, J. W. Lee, B. Gassend, G. E. Suh, M. van Dijk, and S. Devadas. Extracting secret keys from integrated circuits. Very Large Scale Integration (VLSI) Systems, IEEE Transactions on, 13(10):1200-1205, December 2005], [G. E. Suh and S. Devadas. Physical unclonable functions for device authentication and secret key generation. Design Automation Conference, 2007. DAC '07. 44th ACM/IEEE, pages 9-14, 2007] and [M. Majzoobi, F. Koushanfar, and M. Potkonjak. Lightweight secure pufs. In ICCAD '08: Proceedings of the 2008 IEEE/ACM International Conference on Computer-Aided Design, pages 670-673, Piscataway, NJ, USA, 2008. IEEE Press]; however, it was possible to break them by means of mechanical learning methods [U. Rührmair, F. Sehnke, J. Sölter, G. Dror, S. Devadas, and J. Schmidhuber. Modeling attacks on physical unclonable functions. In Proceedings of the 17th ACM conference on Computer and communications security, CCS '10, pages 237-249, New York, NY, USA, 2010. ACM].

Furthermore, the US 2003/0204743 A1, US 2009/0222672 A1, US 2009/0083833 A1, US 2009/079050 A2, US 2011/0050279 A1, and US 2011/0095782 A1 are associated with the arbiter PUF architecture.

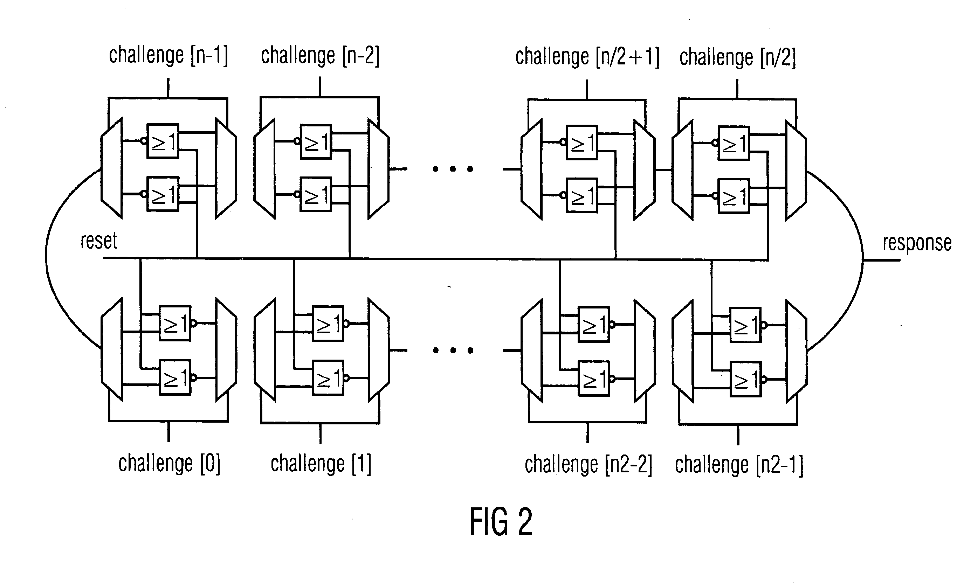

Fig. 2 shows a block diagram of a common bistable ring PUF. The architecture of the bistable ring PUF [Q. Chen, G. Csaba, P. Lugli, U. Schlichtmann, and U. Rührmair. The bistable ring puf: A new architecture for strong physical unclonable functions. In IEEE Int. Symposium on Hardware-Oriented Security and Trust, June 2011], [Q. Chen, G. Csaba, P. Lugli, U. Schlichtmann, and U. Ruhrmair. Characterization of the bistable ring puf. In Design, Automation Test in Europe Conference Exhibition (DATE), 2012, pages 1459-1462, march 2012] was published in 2011. Thereby, a combinatorial ring having a reset signal is held in an initial state. Each ring block comprises two components having individual characteristics. The challenge bits configure for each ring block those components which are connected to form a ring and those which remain unused. If the reset signal is taken away, the ring will settle for one of two possible states, which eventually also determines whether the response will be 0 or 1.

However, if the components within a ring block are very similar, the associated challenge bit will have no influence on the response since the run time ratios within the ring do not change. This results in a poor distribution of zeroes and ones in the PUF instances, as is shown in Figs. 3a to 5c.

Fig. 3 a shows in a diagram the distribution of PUFs with x % ones for a 4-bit bistable ring PUF. Thereby, the ordinate denotes the number of PUFs, where the abscissa denotes % ones in PUF.

Fig. 3b shows in a diagram the distribution of PUFs with x % zeros for a 4-bit bistable ring PUF. Thereby, the ordinate denotes the number of PUFs, where the abscissa denotes % zeros in PUF.

Fig. 3c shows in a diagram the distribution of PUFs with x % unsettled for a 4-bit bistable ring PUF. Thereby, the ordinate denotes the number of PUFs, where the abscissa denotes % unsettled in PUF.

Fig. 4a shows in a diagram the distribution of PUFs with x % ones for a 6-bit bistable ring PUF. Thereby, the ordinate denotes the number of PUFs, where the abscissa denotes % ones in PUF.

Fig. 4b shows in a diagram the distribution of PUFs with x % zeros for a 6-bit bistable ring PUF. Thereby, the ordinate denotes the number of PUFs, where the abscissa denotes % zeros in PUF.

Fig. 4c shows in a diagram the distribution of PUFs with x % unsettled for a 6-bit twisted bistable ring PUF. Thereby, the ordinate denotes the number of PUFs, where the abscissa denotes % unsettled in PUF.

Fig. 5a shows in a diagram the distribution of PUFs with x % ones for a 8-bit bistable ring PUF. Thereby, the ordinate denotes the number of PUFs, where the abscissa denotes % ones in PUF.

Fig. 5b shows in a diagram the distribution of PUFs with x % zeros for a 8-bit bistable ring PUF. Thereby, the ordinate denotes the number of PUFs, where the abscissa denotes % zeros in PUF.

Fig. 5c shows in a diagram the distribution of PUFs with x % unsettled for a 8-bit twisted bistable ring PUF. Thereby, the ordinate denotes the number of PUFs, where the abscissa denotes % unsettled in PUF.

The glitch PUF [D. Suzuki and K. Shimizu. The glitch puf: A new delay-puf architecture exploiting glitch shapes. Cryptographic Hardware and Embedded Systems (CHES) 2010, pages 366-382,2010] was presented in 2010. It lacks the temporal curve (the shape) of a glitch signal generated by a nonlinear, unique logic network. As a result, it is intended to withstand mechanical learning methods.

The method of how a response is generated from a challenge is significantly more complex than in both other architectures and requires individual adaptations for each design.

Therefore, it is the object of the present invention to provide a PUF which provides an improved tradeoff between implementation complexity and nonlinear behavior and/or between implementation complexity and uniform distribution of responses.

This object is solved by a PUF according to claim 1, a method according to claim 12 and a computer program according to claim 13.

A PUF is provided. The PUF comprises a bistable ring of a plurality of inverter stages, wherein the bistable ring comprises multiplexers interspersed between the inverter stages. The PUF is configured to change, in dependence on challenge bits applied to the multiplexers, a course of the bistable ring along which the inverter stages are serially connected via the multiplexers.

According to the concept of the present invention, an improved nonlinear behavior and/or an improved uniform distribution of responses can be achieved by changing the course of the bistable ring along which the inverter stages are serially connected via the multiplexers in dependence on the challenge bits applied to the multiplexers.

Further, a method for obtaining a response from a PUF to a challenge comprising challenge bits is provided. The PUF comprises a bistable ring of a plurality of inverter stages, wherein the bistable ring comprises multiplexers interspersed between the inverter stages. The PUF is configured to change, in dependence on challenge bits applied to the multiplexers, a course of the bistable ring along which the inverter stages are serially connected via the multiplexers. In a first step, the plurality of challenge bits are provided to the PUF. In a second step, an oscillation of the bistable ring is initiated. In a third step, a state of the bistable ring is sampled between two inverter stages of the course of the bistable ring at a sampling time. In a fourth step, the sampled state of the bistable ring is provided as response of the bistable ring to the challenge bits.

Embodiments of the present invention are described herein making reference to the appended drawings.
- Fig. 1: shows a block diagram of a common arbiter PUF.
- Fig. 2: shows a block diagram of a common bistable ring PUF.

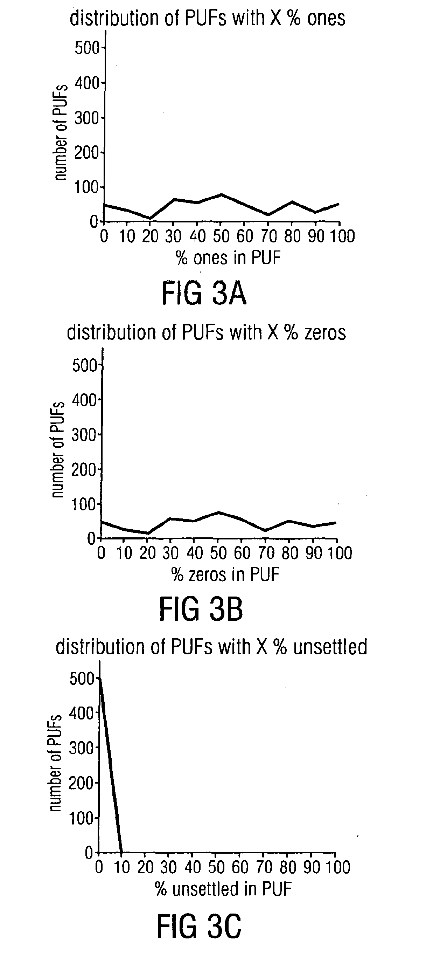

- Fig. 3a: shows in a diagram the distribution of PUFs with x % ones for a 4-bit bistable ring PUF.
- Fig. 3b: shows in a diagram the distribution of PUFs with x % zeros for a 4-bit bistable ring PUF.
- Fig. 3c: shows in a diagram the distribution of PUFs with x % unsettled for a 4-bit bistable ring PUF.

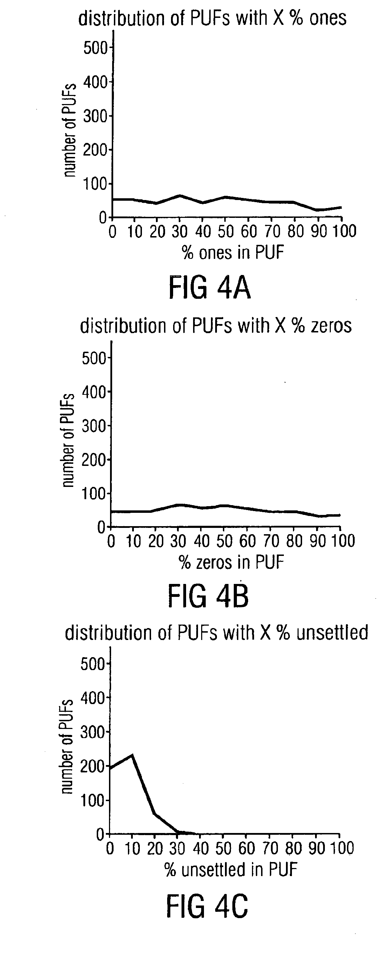

- Fig. 4a: shows in a diagram the distribution of PUFs with x % ones for a 6-bit bistable ring PUF.
- Fig. 4b: shows in a diagram the distribution of PUFs with x % zeros for a 6-bit bistable ring PUF.
- Fig. 4c: shows in a diagram the distribution of PUFs with x % unsettled for a 6-bit bistable ring PUF.

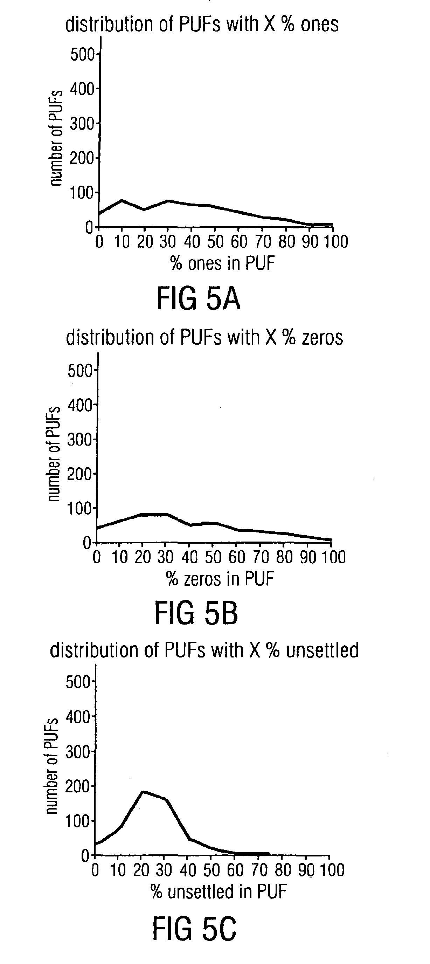

- Fig. 5a: shows in a diagram the distribution of PUFs with x % ones for a 8-bit bistable ring PUF.
- Fig. 5b: shows in a diagram the distribution of PUFs with x % zeros for a 8-bit bistable ring PUF.
- Fig. 5c: shows in a diagram the distribution of PUFs with x % unsettled for a 8-bit bistable ring PUF.

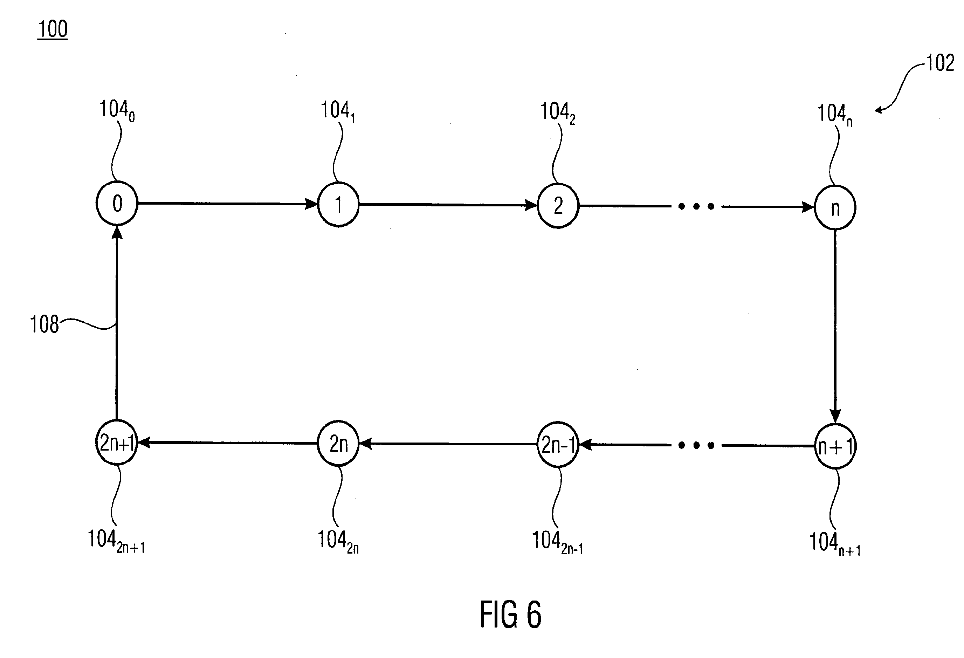

- Fig. 6: shows a block diagram of a PUF according to an embodiment of the present invention.

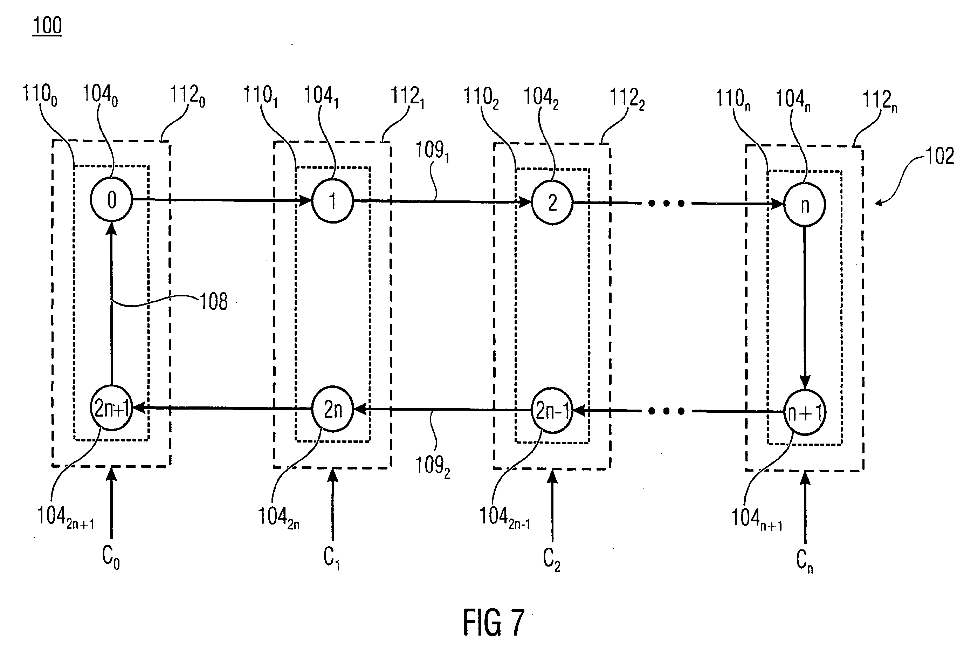

- Fig. 7: shows a block diagram of the PUF according to an embodiment of the present invention.

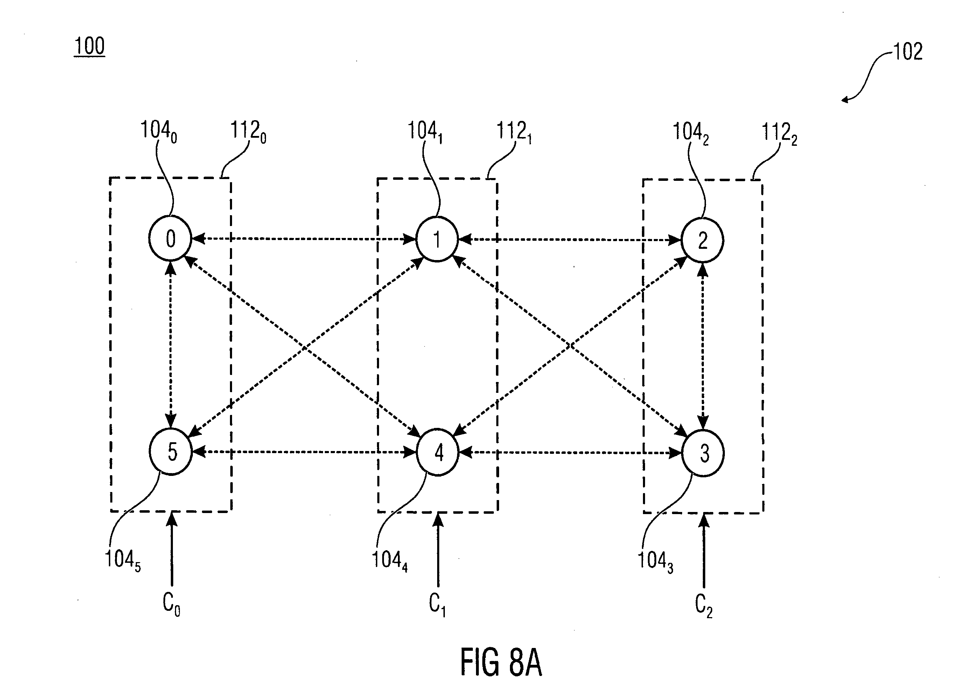

- Fig. 8a: shows a block diagram of a PUF comprising a bistable ring of six inverter stages and possible courses of the bistable ring along which the six inverter stages can be serially connected, according to an embodiment of the present invention.

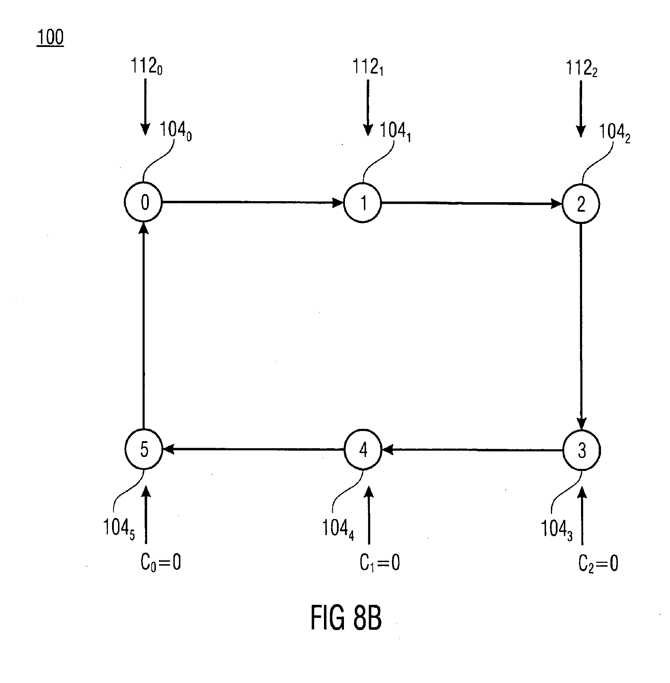

- Fig. 8b: shows a block diagram of the PUF shown in Fig. 8a and the course of the bistable ring along which the six inverter stages are serially connected for the challenge bits c₁ = 0, c₂ = 0 and c₃ = 0.

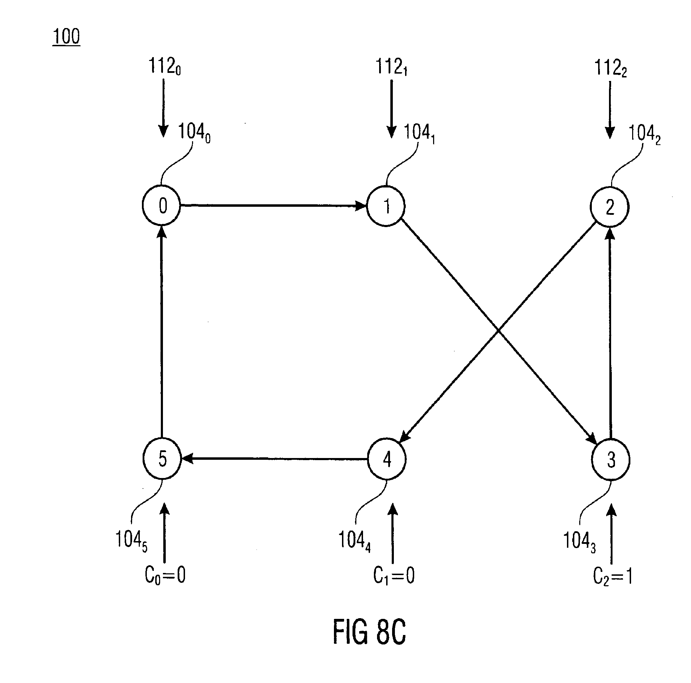

- Fig. 8c: shows a block diagram of the PUF shown in Fig. 8a and the course of the bistable ring along which the six inverter stages are serially connected for the challenge bits c₁ = 0, c₂ = 0 and c₃ = 1.

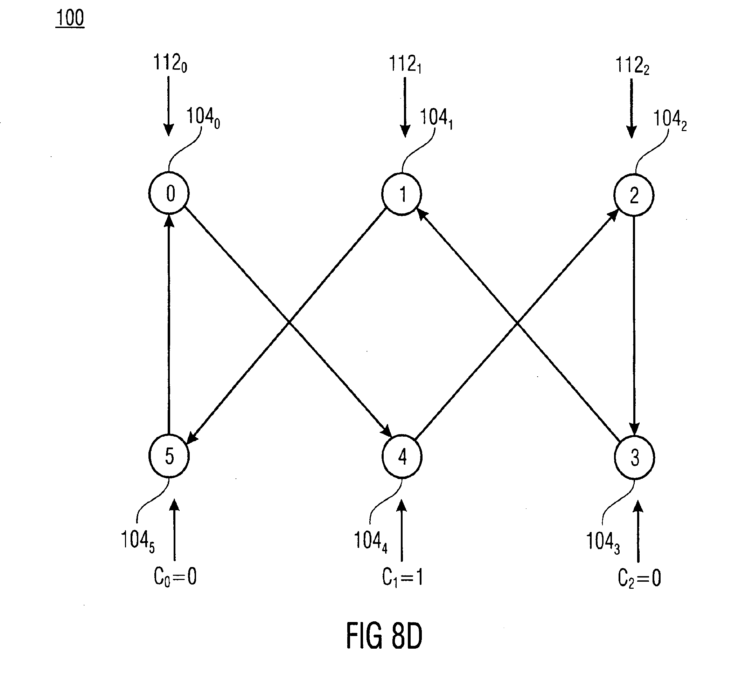

- Fig. 8d: shows a block diagram of the PUF shown in Fig. 8a and the course of the bistable ring along which the six inverter stages are serially connected for the challenge bits c₁ = 0, c₂ = 1 and c₃ = 0.

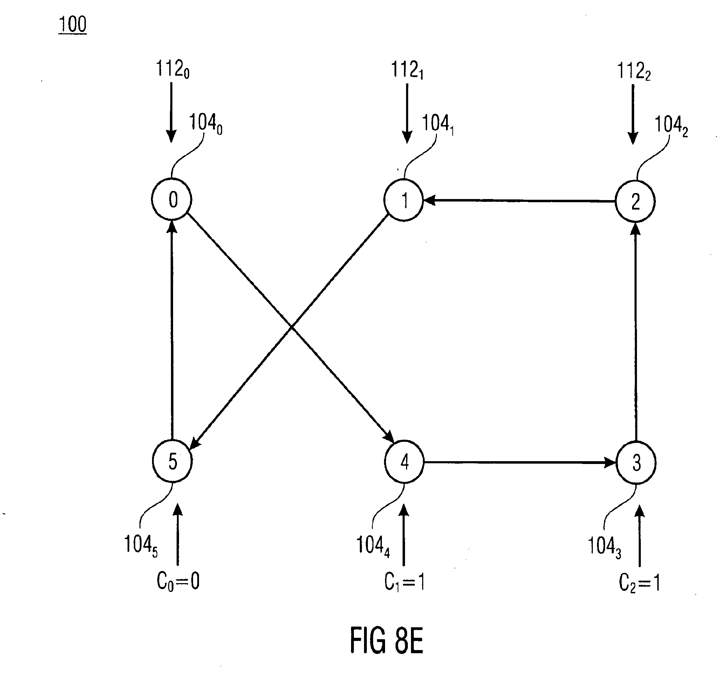

- Fig. 8e: shows a block diagram of the PUF shown in Fig. 8a and the course of the bistable ring along which the six inverter stages are serially connected for the challenge bits c₁ = 0, c₂ = 1 and c₃ = 1.

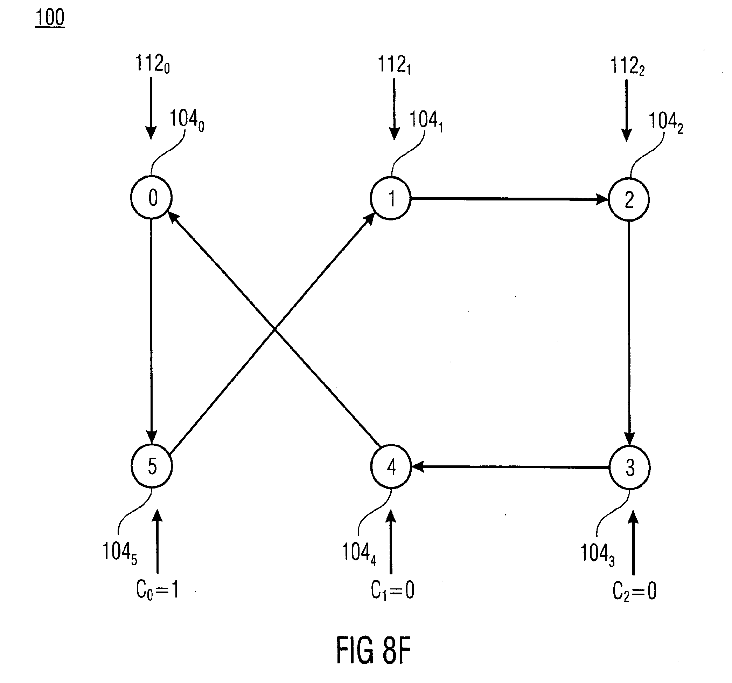

- Fig. 8f: shows a block diagram of the PUF shown in Fig. 8a and the course of the bistable ring along which the six inverter stages are serially connected for the challenge bits c₁ = 1, c₂ = 0 and c₃ = 0.

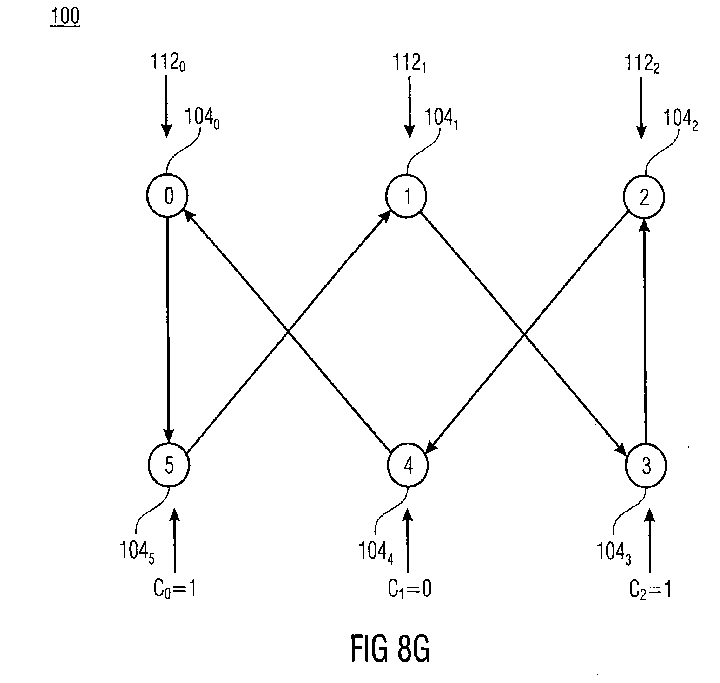

- Fig. 8g: shows a block diagram of the PUF shown in Fig. 8a and the course of the bistable ring along which the six inverter stages are serially connected for the challenge bits c₁ = 1, c₂ = 0 and c₃ = 1.

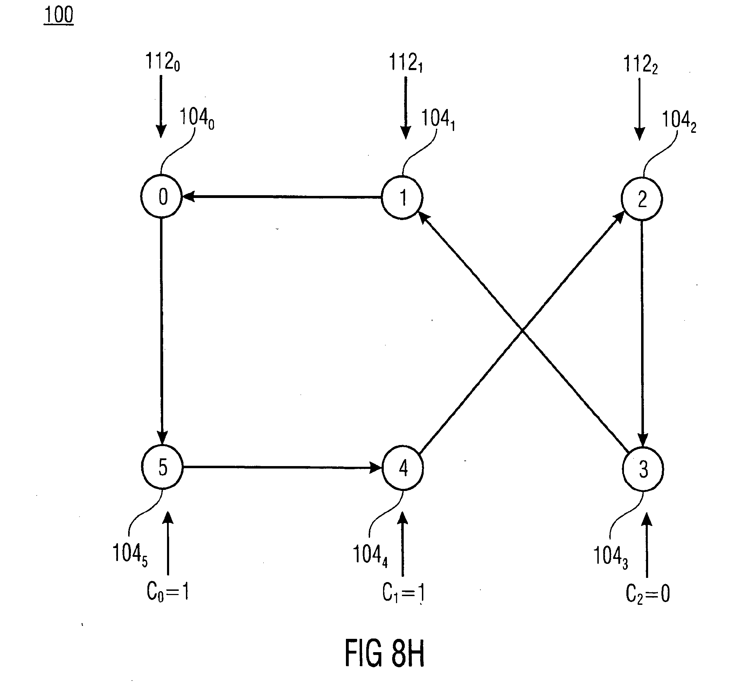

- Fig. 8h: shows a block diagram of the PUF shown in Fig. 8a and the course of the bistable ring along which the six inverter stages are serially connected for the challenge bits c₁ = 1, c₂ = 1 and c₃ = 0.

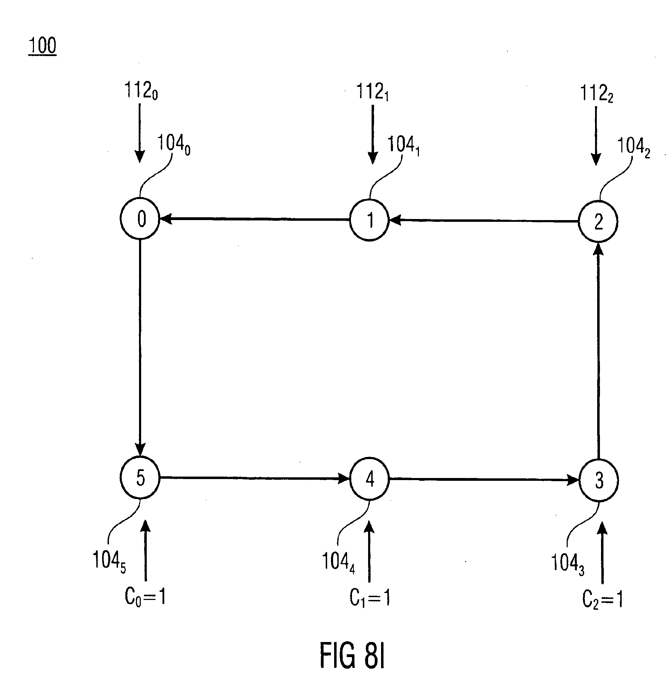

- Fig. 8i: shows a block diagram of the PUF shown in Fig. 8a and the course of the bistable ring along which the six inverter stages are serially connected for the challenge bits c₁ = 1, c₂ = 1 and c₃ = 1.

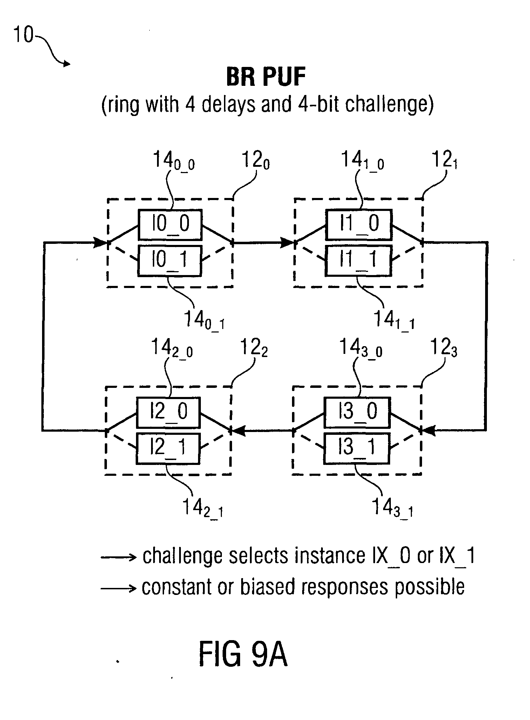

- Fig. 9a: shows a block diagram of a common bistable ring PUF with four delays and a four bit challenge.

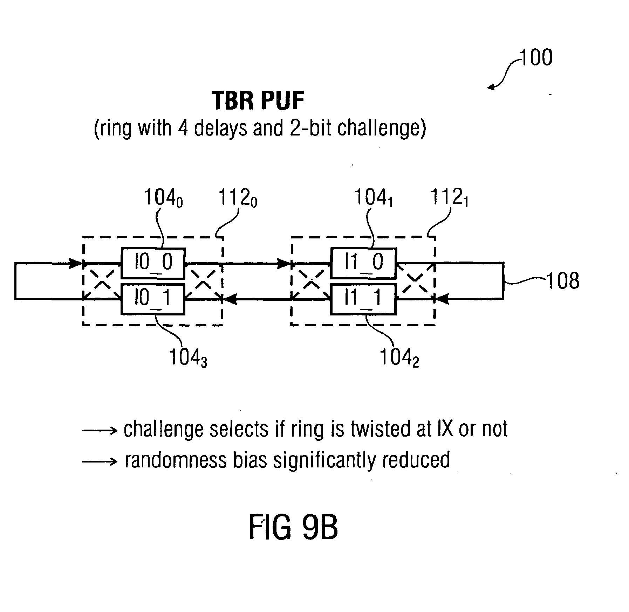

- Fig. 9b: shows a block diagram of a PUF comprising a bistable ring of four inverter stages according to an embodiment of the present invention.

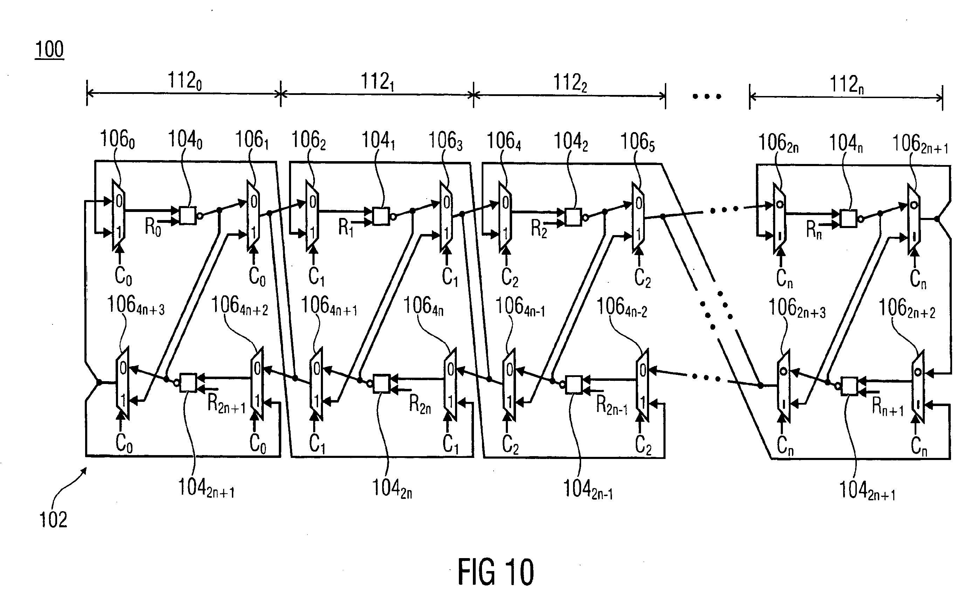

- Fig. 10: shows a block diagram of the PUF according to an embodiment of the present invention.

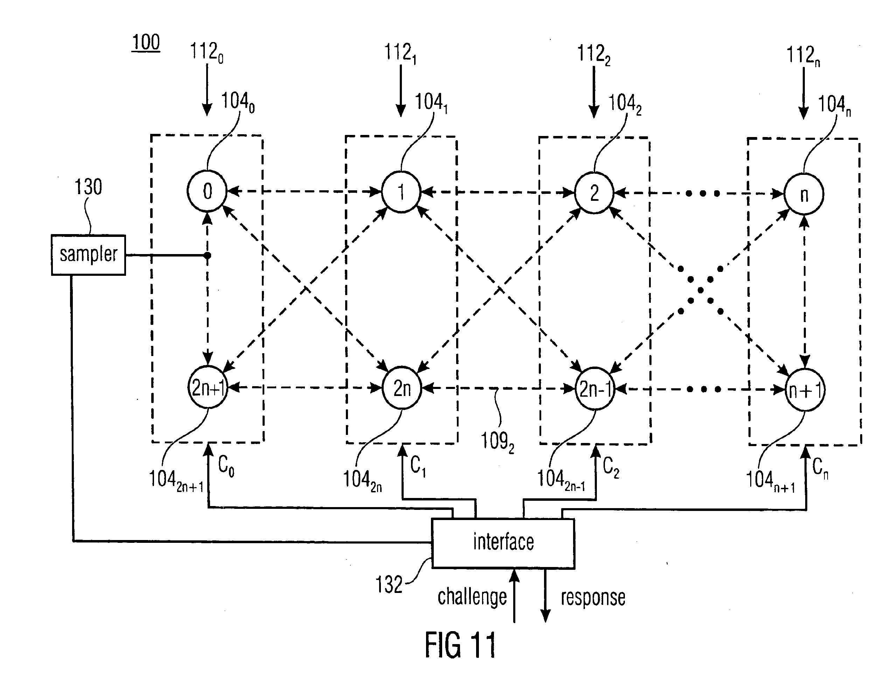

- Fig. 11: shows a block diagram of the PUF according to an embodiment of the present invention.

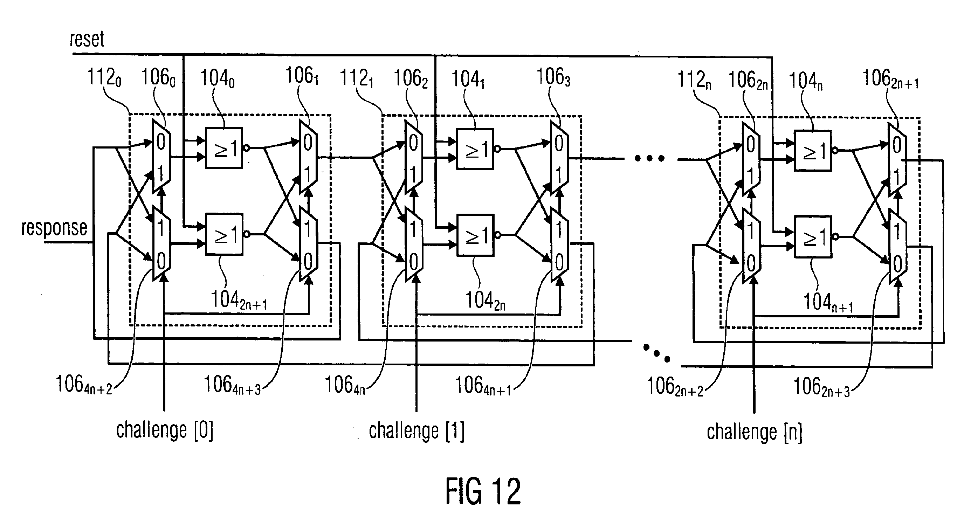

- Fig. 12: shows a block diagram of a PUF according to a further embodiment of the present invention.

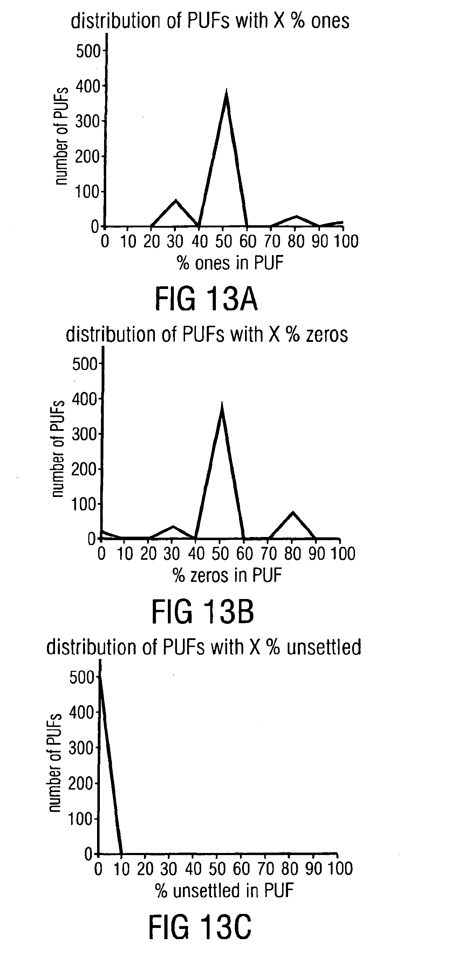

- Fig. 13a: shows in a diagram the distribution of PUFs with x % ones for a 2-bit twisted bistable ring PUF.
- Fig. 13b: shows in a diagram the distribution of PUFs with x % zeros for a 2-bit twisted bistable ring PUF.
- Fig. 13c: shows in a diagram the distribution of PUFs with x % unsettled for a 2-bit twisted bistable ring PUF.

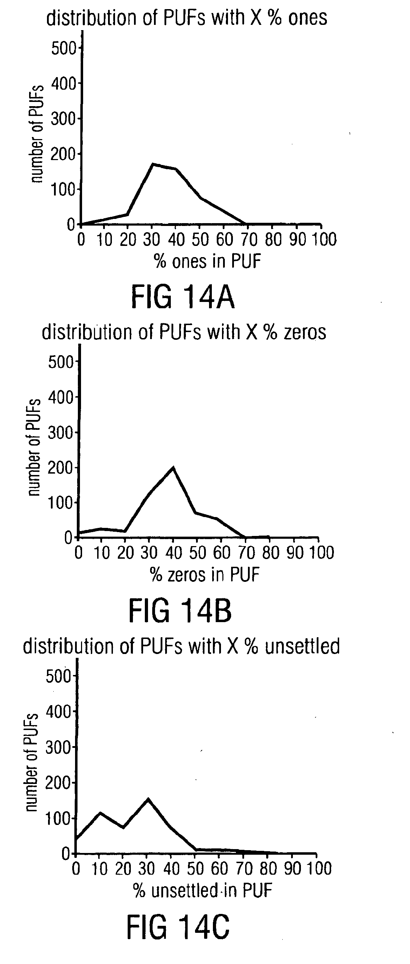

- Fig. 14a: shows in a diagram the distribution of PUFs with x % ones for a 4-bit twisted bistable ring PUF.
- Fig. 14b: shows in a diagram the distribution of PUFs with x % zeros for a 4-bit twisted bistable ring PUF.
- Fig. 14c: shows in a diagram the distribution of PUFs with x % unsettled for a 4-bit twisted bistable ring PUF.

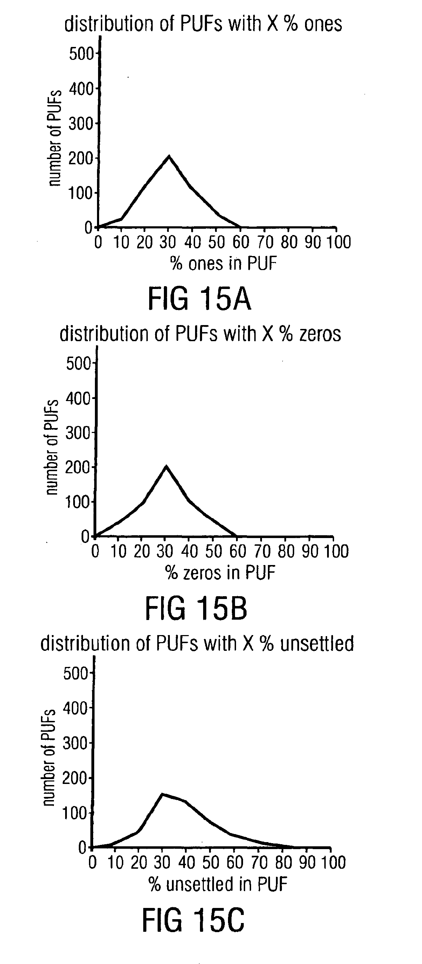

- Fig. 15a: shows in a diagram the distribution of PUFs with x % ones for a 6-bit twisted bistable ring PUF.
- Fig. 15b: shows in a diagram the distribution of PUFs with x % zeros for a 6-bit twisted bistable ring PUF.
- Fig. 15c: shows in a diagram the distribution of PUFs with x % unsettled for a 6-bit twisted bistable ring PUF.

Equal or equivalent elements or elements with equal or equivalent functionality are denoted in the following description by equal or equivalent reference numerals.

In the following description, a plurality of details are set forth to provide a more thorough explanation of embodiments of the present invention. However, it will be apparent to those skilled in the art that embodiments of the present invention may be practiced without these specific details. In other instances, well-known structures and devices are shown in block diagram form rather than in detail in order to avoid obscuring embodiments of the present invention. In addition, features of the different embodiments described hereinafter may be combined with each other, unless specifically noted otherwise.

Fig. 6 shows a block diagram of a PUF 100 according to an embodiment of the present invention. The PUF 100 comprises a bistable ring 102 of a plurality of inverter stages 104₀ - 104₂ₙ₊₁, wherein the bistable ring 102 comprises multiplexers interspersed between the inverter stages 104₀ - 104₂ₙ₊₁. The PUF 100 is configured to change, in dependence on challenge bits applied to the multiplexers, a course 108 of the bistable ring 102 along which the inverter stages 104₀ - 104₂ₙ₊₁ are serially connected via the multiplexers.

According to the concept of the present invention, an improved nonlinear behavior and/or an improved uniform distribution of responses can be achieved by changing, the course 108 of the bistable ring 102 along which the inverter stages 104₀ - 104₂ₙ₊₁ are serially connected via the multiplexers in dependence on the challenge bits applied to the multiplexers.

In embodiments, the PUF 100 can comprise up to n+1 inverter stages 104₀ - 104₂ₙ₊₁, wherein n is a natural number greater than or equal to three (n ≥ 3).

For example, the PUF 100 can comprise 10, 50, 100, 200, 300, 500, 1000, 2000, 3000, 5000, 10000 or even more inverter stages 104₀ - 104₂ₙ₊₁.

Note that in Fig. 6, the course 108 of the bistable ring 102 along wich the inverter stages 104₀ - 104₂ₙ₊₁ are serially connected is indicated by arrows connecting the inverter stages 104₀ - 104₂ₙ₊₁.

The PUF 100 can be configured to change the course 108 of the bistable ring 102 along which the inverter stages 104₀ - 104₂ₙ₊₁ are serially connected by changing the order in which the inverter stages 104₀ - 104₂ₙ₊₁ are connected into the course 108 of the bistable ring 102.

For example, the PUF 100 can be configured to change the course 108 of the bistable ring 102 shown in Fig. 6 by disconnecting the series connection of the 0^{th} inverter stage 104₀, the first inverter stage 104₁ and the second inverter stage 104₂, disconnecting the series connection of the (2n+1)^{th} inverter stage 104₂ₙ₊₁, the (2n)^{th} inverter stage 104₂ₙ and the (2n-1)^{th} inverter stage 104₂ₙ₋₁, serially connecting the 0^{th} inverter stage 104₀, the (2n)^{th} inverter stage 104₂ₙ and the second inverter stage 104₂, and serially connecting the (2n-1)^{th} inverter stage 104₂ₙ₋₁, the first inverter stage 104₁ and the (2n+1)^{th} inverter stage 104₂ₙ₊₁.

Naturally, the PUF 100 can also be configured to change the course 108 of the bistable ring 102 by establishing any other serial connection of the plurality of inverter stages 104₀ - 104₂ₙ₊₁. For example, the PUF 100 could also be configured to disconnect the series connection of the 0^{th} inverter stage 104₀, the first inverter stage 104₁ and the second inverter stage 104₂, to disconnect the series connection of the (2n)^{th} inverter stage 104₂ₙ and the (2n-1)^{th} inverter stage 104₂ₙ₋₁, to serially connect the 0^{th} inverter stage 104₀ and the second inverter stage 104₂, and to serially connect the (2n-1)^{th} inverter stage 104₂ₙ₋₁, the first inverter stage 104₁ and the (2n)^{th} inverter stage 104₂ₙ.

In embodiments, independent from the challenge bits applied to the multiplexers, each of the plurality of inverter stages 104₀ - 104₂ₙ₊₁ is connected into the course 108 of the bistable ring 102.

As shown in Fig. 6, the PUF 100 can comprise an even number of inverter stages 104₀ - 104₂ₙ₊₁.

Fig. 7 shows a block diagram of the PUF 100 according to a further embodiment of the present invention. In contrast to Fig. 6, in Fig. 7 the plurality of inverter stages 104₀ - 104₂ₙ₊₁ are grouped into a plurality of ring units 110₁ - 110ₙ, each ring unit comprising one inverter stage of a first half of inverter stages 104₀ - 104ₙ of the plurality of inverter stages 104₀ - 104₂ₙ₊₁ and one inverter stage of a second half of inverter stages 104ₙ₊₁ - 104₂ₙ₊₁ of the plurality of inverter stages 104₀ - 104₂ₙ₊₁. The PUF 100 is configured to change, in dependence on the challenge bits applied to the multiplexers, the course 108 of the bistable ring 102 such that irrespective of the challenge bits applied to the multiplexers, a forward path 109₁ of the course 108 sequentially passes the ring units 110₀ - 110ₙ in a forward order and a backward path 109₂ of the course 108 sequentially passes the ring units 110₀ - 110ₙ in a backward order opposite to the forward order, and such that the challenge bits applied to the multiplexers determine for each ring unit whether the forward path 109₁ of the course 108 passes through the inverter stage of the first half of the inverter stages 104₀ - 104ₙ and the backward path 109₂ of the course 108 passes through the inverter stage of the second half of inverter stages 104ₙ₊₁ - 104₂ₙ₊₁, or whether the forward path 109₁ of the course 108 passes through the inverter stage of the second half of inverter stages 104ₙ₊₁ - 104₂ₙ₊₁ and the backward path 109₂ of the course 108 passes through the inverter stage of the first half of inverter stages 104₀ - 104ₙ.

In other words, the plurality of inverter stages 104₀ - 104₂ₙ₊₁ can be divided in a first half and a second half. The first half of the plurality of inverter stages 104₀ - 104₂ₙ₊₁ can be formed by the inverter stages 104₀ - 104ₙ, wherein the second half of the plurality of inverter stages 104₀ - 104₂ₙ₊₁ can be formed by the inverter stages 104ₙ₊₁ - 104₂ₙ₊₁.

As shown in Fig. 7, the 0^{th} ring unit 110₀ can comprise the 0^{th} inverter stage 104₀ and the (2n+1)^{th} inverter stage 104₂ₙ₊₁, wherein the first ring unit 110₁ can comprise the first inverter stage 104₁ and the (2n)^{th} inverter stage 104₂ₙ, wherein the second ring unit 110₂ can comprise the second inverter stage 104₂ and the (2n-1)^{1h} inverter stage 104₂ₙ₋₁, and wherein the (n)^{th} ring unit 110ₙ can comprise the (n)^{th} inverter stage 104ₙ and the (n+1)^{th} inverter stage 104ₙ₊₁.

Moreover, the course 108 of the bistable ring 102 can comprise a forward path 109₁ and a backward path 109₂. The forward path 109₁ can be defined as the path of the course 108 of the bistable ring 102 sequentially passing the ring units 110₀ - 110ₙ beginning from the 0^{th} ring unit 110₀ in direction to the (n)^{th} ring unit 110ₙ (in the right direction in the plain of Fig. 7). The backward path 109₂ can be defined as the path of the course 108 of the bistable ring 102 sequentially passing the ring units 110₀ - 110ₙ beginning from the (n)^{th} ring unit 110ₙ in direction to the 0^{th} ring unit 110₀ (in the left direction in the plain of Fig. 7).

The challenge bits applied to the multiplexers determine or define for each ring unit 110₀ - 110ₙ through which of the inverter stages the forward path 109₁ and the backward path 109₂ of the course 108 of the bistable ring 102 is passed.

For example, the forward path 109₁ of the course 108 of the bistable ring 102 can be passed through the first inverter stage 104₁, wherein the backward path 109₂ of the course 108 of the bistable ring 102 can be passed through the (2n)^{th} inverter stage 104₂ₙ.

Alternatively, the forward path 109₁ of the course 108 of the bistable ring 102 can be passed through the (2n)^{th} inverter stage 104₂ₙ, wherein the backward path 109₂ of the course 108 of the bistable ring 102 can be passed through the first inverter stage 104₁.

The plurality of the ring units 110₀ - 110ₙ and the multiplexers can be grouped into a plurality of ring blocks 112₀ - 112ₙ, wherein each ring block 112₀ - 112ₙ comprises one ring unit of the plurality of ring units 110₀ - 110ₙ and some of the multiplexers.

For example, the 0^{th} ring block 112₀ can comprise the 0^{th} ring unit 110₀ and a number of the multiplexers, wherein the first ring block 112₁ can comprise the first ring unit 110₁ and a number of the multiplexers, wherein the second ring block 112₂ can comprise the second ring unit 110₂ and a number of the multiplexers, and wherein the (n)^{th} ring block 112ₙ can comprise the n^{th} ring unit 110ₙ and a number of the multiplexers.

Note that each ring block of the plurality of ring blocks 112₀ - 112ₙ can comprise the same number of multiplexers. For example, each ring block of the plurality of ring blocks 112₀ - 112ₙ can comprise one, two, three, four, five, six, or even more multiplexers.

Moreover, the PUF 100 can be configured to apply the same challenge bit to the multiplexers of the same ring block.

Further, one of the challenge bits c₀ - cₙ can be applied to each of the ring block 112₀ - 112ₙ, wherein each of the ring blocks 112₀ - 112ₙ can be configured to apply the respective challenge bit to its multiplexers.

For example, the PUF 100 can be configured to apply the 0^{th} challenge bit c₀ to the 0^{th} ring block 112₀, wherein the 0^{th} ring block 112₀ can be configured to apply the 0^{th} challenge bit to its multiplexers.

Similarly, the PUF 100 can be configured to apply the first challenge bit c₁ to the first ring block 112₁, wherein the first ring block 112₁ can be configured to apply the first challenge bit c₁ to its multiplexers.

The functionality of the ring block 102 shown in Fig. 7 will be described in the following based on the simplified ring block shown in Fig. 8a having six inverter stages 104₀ - 104₅.

Fig. 8 shows a block diagram of a PUF 100 of six inverter stages 104₀ - 104₅, according to an embodiment of the present invention. In Fig. 8, the possible connections which the PUF 100 can be configured to established between the inverter stages 104₀ - 104₅ via the multiplexers are indicated by dotted arrows.

As indicated, each inverter stage of the first half of inverter stages 104₀ - 104₂ can be connected either to another inverter stage of the first half of inverter stages 104₀ - 104₂ or to an inverter stage of the second half of inverter stages 104₃ - 104₅.

Similarly, each inverter stage of the second half of inverter stages 104₃ - 104₅ can be connected either to another inverter stage of the second half of inverter stages 104₃ - 104₃ or to an inverter stage of the first half of inverter stages 104₀ - 104₂.

For example, the 0^{th} inverter stage 104₀ can be connected either to the first inverter stage 104₁, the fourth inverter stage 104₄ or the fifth inverter stage 104₅. The first inverter stage 104₁ can either be connected to the 0^{th} inverter stage 104₀, the second inverter stage 104₂, the third inverter stage 104₃ or the fifth inverter stage 104₅.

Via the challenge bits it can be determined which inverter stages are connected to each other to form the bistable ring 102.

In embodiments, the challenge bits applied to the ring blocks 112₀ - 112₂ determine or define how the inverter stages of two adjacent ring blocks 112₀ - 112₂ are connected via the respective multiplexers to each other. If challenge bits having the same value are applied to two adjacent ring blocks, then the inverter stages of the first half of inverter stages are connected to each other and the inverter stages of the second half of inverter stages are connected to each other. Moreover, if challenge bits having different values are applied to adjacent ring blocks then an inverter stage of the first half of inverter stages of the one of the two ring blocks is connected to an inverter stage of the second half of inverter stages of the other ring block, and vice versa.

For example, if the challenge bits c₁ and c₂ applied to the first and second ring blocks 112₁ and 112₂ comprise the same value, then the first inverter stage 104₁ of the first ring block 112₁ is connected to the second inverter stage 104₂ of the second ring block 112₂ and the fourth inverter stage 104₄ of the first ring block 112₁ is connected to the third inverter stage 104₃ of the second ring block 112₂. Moreover, if the challenge bits c₁ and c₂ applied to the first ring block 112₂ and the second ring block 112₂ comprise different values, then the first inverter stage 104₁ of the first ring block 112₁ is connected to the third inverter stage 104₃ of the second ring block 112₂ and the fourth inverter stage 104₄ of the first ring block 112₁ is connected to the second inverter stage 104₂ of the second ring block 112₂.

Note that via the multiplexers a connection can be established in both directions between the inverter stages. Based on the challenge bits applied to two adjacent ring blocks it can be defined or determined whether an output of an inverter stage of the first of the two ring blocks is connected to an input of an inverter stage of the second of the two ring blocks or an input of the inverter stage of the first of the two ring blocks is connected to an output of the inverter stage of the second of the two ring blocks.

For example, if the first and second challenge bits c₁ and c₂ both comprise the value logic zero (c₁ = c₂ = 0), then an output of the first inverter stage 104₁ of the first ring block 112₁ can be connected to an input of the second inverter stage 104₂ of the second ring block 112₂, and an output of the fourth inverter stage 104₄ of the first ring block 112₁ can be connected to an input of the third inverter stage 104₃ of the second ring block 112₂.

If the first and second challenge bits c₁ and c₂ both comprise the value logic one (c₁ = c₂ = 1), then an output of the second inverter stage 104₂ of the second ring block 112₂ can be connected to an input of the first inverter stage 104₁ of the first ring block 112₁ and an output of the third inverter stage 104₃ of the second ring block 112₂ can be connected to an input of the fourth inverter stage 104₄ of the first ring block 112₁.

If the first challenge bit c₁ is equal to logic one and the second challenge bit c₂ is equal to logic zero (c₁ = 1; c₂ = 0), then an input of the first inverter stage 104₁ can be connected to an output of the third inverter stage 104₃ and an output of the fourth inverter stage 104₄ can be connected to an input of the second inverter stage 104₂.

If the first challenge bit c₁ is equal to logic zero and the second challenge bit c₂ is equal to logic one (c₁ = 0; c₂ = 1), then an input of the fourth inverter stage 104₄ can be connected to an output of the second inverter stage 104₂ and an input of the third inverter stage 104₃ can be connected to an output of the first inverter stage 104₁.

Fig. 8b shows a block diagram of the PUF 100 shown in Fig. 8a and the course 108 of the bistable ring 102 along which the six inverter stages 104₁ - 104₅ are serially connected for the challenge bits c₁ = 0, c₂ = 0 and c₃ = 0.

Fig. 8c shows a block diagram of the PUF 100 shown in Fig. 8a and the course 108 of the bistable ring 102 along which the six inverter stages 104₁ - 104₅ are serially connected for the challenge bits c₁ = 0, c₂ = 0 and c₃ = 1.

Fig. 8d shows a block diagram of the PUF 100 shown in Fig. 8a and the course 108 of the bistable ring 102 along which the six inverter stages 104₁ - 104₅ are serially connected for the challenge bits c₁ = 0, c₂ = 1 and c₃ = 0.

Fig. 8e shows a block diagram of the PUF 100 shown in Fig. 8a and the course 108 of the bistable ring 102 along which the six inverter stages 104₁ - 104₅ are serially connected for the challenge bits c₁ = 0, c₂ = 1 and c₃ = 1.

Fig. 8f shows a block diagram of the PUF 100 shown in Fig. 8a and the course 108 of the bistable ring 102 along which the six inverter stages 104₁ - 104₅ are serially connected for the challenge bits c₁ = 1, c₂ = 0 and c₃ = 0.

Fig. 8g shows a block diagram of the PUF 100 shown in Fig. 8a and the course 108 of the bistable ring 102 along which the six inverter stages 104₁ - 104₅ are serially connected for the challenge bits c₁ = 1, c₂ = 0 and c₃ = 1.

Fig. 8h shows a block diagram of the PUF 100 shown in Fig. 8a and the course 108 of the bistable ring 102 along which the six inverter stages 104₁ - 104₅ are serially connected for the challenge bits c₁ = 1, c₂ = 1 and c₃ = 0.

Fig. 8i shows a block diagram of the PUF 100 shown in Fig. 8a and the course 108 of the bistable ring 102 along which the six inverter stages 104₁ - 104₅ are serially connected for the challenge bits c₁ = 1, c₂ = 1 and c₃ = 1.

In the following, differences between the common bistable ring PUF and the bistable ring PUF 100 according to the concept of the present invention are described with respect to Figs. 9a and 9b.

Fig. 9a shows a block diagram of a common bistable ring PUF. The common bistable ring PUF comprises four ring blocks 12₀ - 12₃, wherein each ring block of the four ring blocks 12₀ - 12₃ comprises a first delay element 1_{X_0} and a second delay element 14_{X_1}. In dependence on the challenge bit applied to the respective ring block, either the first delay element 14_{X_0} or the second delay element 14_{X_1} is connected into the course of the bistable ring. In other words, the challenge selects instance IX_0 or IX_1. Thereby, constant or biased responses are possible.

Fig. 9b shows a diagram of a PUF 100 comprising a bistable ring 102 of four inverter stages 104₀ - 104₃ according to an embodiment of the present invention. Thereby, a first ring block 112₀ comprises the 0^{th} inverter stage 104₀ and the third inverter stage 104₃, wherein a first ring block 112₁ comprises the first inverter stage 104₁ and the second inverter stage 104₂.

In dependence on the challenge bits applied to the ring blocks 112₀ and 112₁ (or more precisely to the multiplexers of the ring blocks 112₀ and 112₁), the course 108 of the bistable ring 102 along with the inverter stages 104₀ - 104₃ are serially connected via the multiplexers can be changed.

As indicated in Fig. 9b, the inverter stages of the respective ring block are connected in dependence on the challenge bit applied to the respective ring block either into the course 108 of the bistable ring 102 indicated by the straight line or by the course 108 of the bistable ring 102 indicated by the dashed line.

In other words, Fig. 9b shows a twisted bistable ring 100 with four delays and a two bit challenge. Thereby, the challenge selects if the ring 102 is twisted at IX or not. In contrast to the bistable ring PUF 10 shown in Fig. 9a, the randomness bias is significantly reduced in the twisted bistable ring PUF 100 shown in Fig. 9b.

Instead of selecting per ring block - as is done with bistable ring PUFs - the component used within the ring, each ring block exhibits a forward path and a backward path, and the associated challenge bit no longer takes decisions in terms of "within the ring"/"not within the ring", but takes decisions in terms of "in the forward path of the ring"/"in the backward path of the ring". Said "twisting", as is shown in Fig. 9b, achieves that all of the components remain within the ring, but will influence a different location each time. The new architecture is referred to as Twisted Bistable Ring PUF (TBR PUF).

In the following, a possible implementation of the PUF 100 is described making reference to Fig. 10.

Fig. 10 shows a block diagram of the PUF 100 according to an embodiment of the present invention. As already explained in detail above, the PUF 100 comprises a bistable ring 102 of a plurality of inverter stages 104₀ - 104₂ₙ₊₁, and multiplexers interspersed between the inverter stages 104₀ - 1042ₙ₊₁. The inverter stages 104₀ - 104₂ₙ₊₁ can be grouped into a plurality of ring units 110₀ - 110ₙ (see Fig. 7) each ring unit comprising one inverter stage of a first half of inverter stages 104₀ - 104ₙ of the plurality of inverter stages 104₀ - 104₂ₙ₊₁ and one inverter stage of a second half of inverter stages 104ₙ₊₁ - 104₂ₙ₊₁ of the plurality of inverter stages 104₀ - 104₂ₙ₊₁.

In some embodiments, the PUF 100 can comprises twice as many multiplexers 106₀ - 106₄ₙ₊₃ as inverter stages 104₀ - 104₂ₙ₊₁, or in other words, the PUF 100 can comprise 2n+2 inverter stages 104₀ - 104₂ₙ₊₁ and 4n+4 multiplexers 106₀ - 106₄ₙ₊₃, wherein n is a natural number greater than or equal to three (n ≥ 3).

The multiplexers 106₀ - 106₄ₙ₊₃ can be grouped into a first half of multiplexers 106₀ - 106₂ₙ₊₁ and a second half of multiplexers 106₂ₙ₊₂ - 106₄ₙ₊₃.

Moreover, the ring units 110₀ - 110ₙ and the multiplexers 106₀ - 106₄ₙ₊₃ can be grouped into a plurality of ring blocks 112₀ - 112ₙ such that each ring block comprises one ring unit of the plurality of ring units 110₀ - 110ₙ, two multiplexers of the first half of multiplexers 106₀ - 106₂ₙ₊₁ and two multiplexers of the second half of multiplexers 106₂ₙ₊₂ - 106₄ₙ₊₃.

Each of the multiplexers 106₀ - 106₄ₙ₊₃ can comprise a first input, a second input, an output and a control input, and be configured to connect in dependence on a challenge bit applied to the control input either the first input to the output or the second input to the output.

In the following, it is assumed, that each of the multiplexers 106₀ - 106₄ₙ₊₃ is configured to connect its first input to its output if the challenge bit applied to its control input comprises logic zero, and to connect its second input to its output if the challenge bit applied to its control input comprises logic one. Thus, in the Figs, the first inputs of the multiplexers 106₀ - 106₄ₙ₊₃ are indicated with a "0", wherein the second inputs of the multiplexers 106₀ - 106₄ₙ₊₃ are indicated with a "1".

Subsequently, the connections between the multiplexers 106₀ - 106₄ₙ₊₃ and inverter stages 104₀ - 104₂ₙ₊₁ within the ring blocks 112₀ - 112ₙ are described.

Within each ring block, an input of the inverter stage of the first half of inverter stages 104₀ - 104ₙ can be connected to an output of a first multiplexer of the two multiplexers of the first half of multiplexers 106₀ - 106₂ₙ₊₁. An output of the inverter stage of the first half of inverter stages 104₀ - 104ₙ can be connected to a first input of a second multiplexer of the two multiplexers of the first half of multiplexers 106₀ - 106₂ₙ₊₁ and to a second input of a second multiplexer of the two multiplexers of the second half of multiplexers 106₂ₙ₊₂ - 106₄ₙ₊₃. An input of the inverter stage of the second half of inverter stages 104ₙ₊₁ - 104₂ₙ₊₁ can be connected to an output of a first multiplexer of the two multiplexers of the second half of multiplexers 106₂ₙ₊₂ - 106₄ₙ₊₃. An output of the inverter stage of the second half of inverter stages 104ₙ₊₁ - 104₂ₙ₊₁ can be connected to a first input of the second multiplexer of the two multiplexers of the second half of multiplexers 106₂ₙ₊₂ - 106₄ₙ₊₃ and to a second input of the second multiplexer of the two multiplexers of the first half of multiplexers 106₀ - 106₂ₙ₊₁.

For example, the first ring block 112₁ comprises the first inverter stage 104₁, the (2n)^{th} inverter stage 104₂ₙ, the second multiplexer 106₂, the third multiplexer 106₃, the (4n)^{th} multiplexer 106₄ₙ and the (4n+1)^{th} multiplexer 106₄ₙ₊₁.

Thereby, an output of the second multiplexer 106₂ can be connected to an input of the first inverter stage 104₁. An output of the first inverter stage 104₁ can be connected to a first input of the third multiplexer 106₃ and to a second input of the (4n+1)^{th} multiplexer 106₄ₙ₊₁. An output of the (4n)^{th} multiplexer 106₄ₙ can be connected to an input of the (2n)^{th} inverter stage 104₂ₙ. An output of the (2n)^{th} inverter stage 104₂ₙ can be connected to a first input of the (4n+1)^{th} multiplexer 106₄ₙ₊₁ and to a first input of the third multiplexer 106₃.

Subsequently, the connections between the ring blocks 112₀ - 112ₙ via the multiplexers 106₀ - 106₄ₙ₊₃ are described. Thereby, the following description applies to two immediately successive (or adjacent) ring blocks of the plurality of ring blocks 112₀ - 112ₙ, referred to as i^{th} and (i+1)^{th} ring blocks, wherein i is a natural number greater than or equal to zero, and wherein i+1 is smaller than or equal to n (0 ≤ i < i+1 ≤ n).

An output of a second multiplexer of the two multiplexers of the first half of multiplexers of the i^{th} ring block 102ᵢ can be connected to a first input of a first multiplexer of the two multiplexers of the first half of multiplexers of the (i+1)^{th} ring block 102ᵢ₊₁ and to a second input of a first multiplexer of the two multiplexers of the second half of multiplexers of the (i+1)^{th} ring block 102ᵢ₊₁. An output of a second multiplexer of the two multiplexers of the second half of multiplexers of the (i+1)^{th} ring block 102ᵢ₊₁ can be connected to a first input of a first multiplexer of the two multiplexers of the second half of multiplexers of the i^{th} ring block 104ᵢ and to a second input of a first multiplexer of the two multiplexers of the first half of multiplexers of the i^{th} ring block 102ᵢ.

For example, the second ring block 112₂ comprises the second inverter stage 104₂, the (2n-1)^{th} inverter stage 104₂ₙ₋₁, the fourth multiplexer 106₄, the fifth multiplexer 106₅, the (4n-2)^{th} multiplexer 106₄ₙ₋₂ and the (4n-1)^{th} multiplexer 106₄ₙ₋₁.

Thereby, an output of the third multiplexer 106₃ can be connected to a first input of the fourth multiplexer 106₄ and to a second input of the (4n-2)^{th} multiplexer 106₄ₙ₋₂. An output of the (4n-1)^{th} multiplexer 106₄ₙ₋₁ can be connected to a first input of the (4n)^{th} multiplexer 106₄ₙ and to a second input of the second multiplexer 106₂.

Similarly, the 0^{th} ring block comprises the 0^{th} inverter stage 104₀, the (2n+1)^{th} inverter stage 104₂ₙ₊₁, the 0^{th} multiplexer 106₀, the first multiplexer 106₁, the (4n+2)^{th} multiplexer 106₄ₙ₊₂ and the (4n+3)^{th} multiplexer 106₄ₙ₊₃.

Thereby, an output of the first multiplexer 106₁ can be connected to a first input of the second multiplexer 106₂ and to a second input of the (4n)^{th} multiplexer 106₄ₙ. An output of the (4n+1)^{th} multiplexer 106₄ₙ₊₁ can be connected to a first input of the (4n+2)^{th} multiplexer 106₄ₙ₊₂ and to a second input of the 0^{th} multiplexer 106₀.

Note that an output of the (4n+3)^{th} multiplexer of the 0^{th} ring block 112₀ can be connected to a first input of the 0^{th} multiplexer of the 0^{th} ring block 112₀ and to a second input of the (4n+2)^{th} multiplexer of the 0^{th} ring block 112₀. Moreover, an output of the (2n+1)^{th} multiplexer 106₂ₙ₊₁ of the (n)^{th} ring block 112ₙ can be connected to a first input of the (2n+2)^{th} multiplexer 106₂ₙ₊₂ of the (n)^{th} ring block 112ₙ and to a second input of the (2n)^{th} multiplexer 106₂ₙ of the (n)^{th} ring block 112ₙ.

As shown in Fig. 10, each inverter stage of the plurality of inverter stages 104₀ - 104ₙ can comprise a first input, a second input and an output, wherein the PUF 100 can be configured to connect the inverter stages into the course of the ring 102 by serially connecting the first inputs and the outputs of the inverter stages 104₀ - 104ₙ, and wherein the PUF 100 can be configured to reset the bistable ring 102 by applying reset bits R₀ - R₂ₙ₊₁ to the second inputs of the inverter stages 104₀ - 104ₙ.

Note that, the reset bits R₀ - R₂ₙ₊₁ applied to the plurality of inverter stages 104₀ - 104ₙ can comprise the same value. For example, the same reset signal caring the same reset bit can be applied to the second inputs of the inverter stages 104₀ - 104ₙ.

Moreover, the reset bits R₀ - R₂ₙ₊₁ applied to the plurality of inverter stages 104₀ - 104ₙ can be used to reset each of the inverter stages 104₀ - 104ₙ to a predefined state.

For example, the inverter stages 104₀ - 104ₙ can be configured to provide a predefined value, e.g., logic zero or logic one, at its outputs in dependence on the reset bits 104₀ - 104ₙ applied to its second inputs.

A shown in Fig. 10, the inverter stages 104₀ - 104ₙ can be NOR gates 104₀ - 104ₙ. Each of the NOR gates 104₀ - 104ₙ can be forced to provide a logic zero at its output by applying a logic one at its second input. Thus, the NOR gates 104₀ - 104ₙ can be reset by applying reset bits R₀ - R₂ₙ₊₁ comprising a logic one. After resetting the NOR gates the values of the reset bits R₀ - R₂ₙ₊₁ can be changed from logic one to logic zero, or in other words, the reset can be released. In this moment, at each NOR gate, a logic zero is present at the first input and at the second input. Thus, each NOR gate will attempt to provide a logic one at its output thereby applying that logic one to the first input of the following NOR gate of the bistable ring it is connected to, thereby initiating an oscillation state.

Moreover, in some embodiments, the PUF 100 can be configured to apply reset bits R₀ - R₂ₙ₊₁ having the same value (e.g., logic zero or logic one) to the second inputs of at least two immediate subsequent inverter stages of the course 108 of the bistable ring 102.

For example, reset bits comprising a logic zero can be applied to first group of at least two immediate subsequent inverter stages of the course 108 of the bistable ring, and reset bits comprising a logic one can be applied to second group of at least two immediate subsequent inverter stages of the course 108 of the bistable ring 102.

Thus, it is also possible to use the reset bits R₀ - R₂ₙ₊₁ in addition to the challenge bits c₀ - cₙ as challenge.

Fig. 11 shows a block diagram of the PUF 100 according to an embodiment of the present invention. In contrast to Fig. 7, in Fig. 11 the possible connections which can be established between the inverter stages 104₀ - 104₂ₙ₊₁ via the multiplexers are indicated by dotted arrows.

As shown in Fig. 11, in some embodiments, the PUF 100 can comprise a sampler 130 for sampling a state of the bistable ring 102 between two (immediate subsequent) inverter stages of the course 108 of the bistable ring 102 at a sampling time, in order to obtain a response of the bistable ring 102 to the challenge bits.

For example, the sampler can be configured to sample the state of the bistable ring 102 between the 0^{th} inverter stage 104₀ and the (2n+1)^{th} inverter stage 104₂ₙ₊₁. Naturally, the sampler 130 can also be configured to sample the state of the bistable ring 102 between any other inverter stages.

The PUF can be configured to adjust the sampling time such that the bistable ring adopts at the sampling time in dependence on the challenge bits c₀ - c₁ one out of three possible states, wherein the three possible states comprises a first logic state (e.g., logic zero), a second logic state (e.g., logic cone) different from the first logic state and an oscillation state.

Furthermore, the PUF 100 can be configured to adjust the sampling time such that the three possible states which the bistable ring 102 can adopt at the sampling time are distributed uniformly for all possible values of the challenge bits.

As shown in Fig. 11, the PUF 100 can comprise an external interface 132 for receiving the challenge bits c₀ - c₁. Further, the external interface 132 can be connected to the ring blocks 112₀ - 112ₙ in order to apply the challenge bits c₀ - c₁ to the ring blocks 112₀ - 112n.

Further, the sampler 130 can be connected to the external interface 132 in order to provide the sampled state of the bistable ring 102 as response of the bistable ring 102 to the challenge bits c₀ - c₁.

In order to obtain a response of the bistable ring 102 to the challenge bits c₀ - c₁, the PUF 100 can be configured to apply the challenge bits to the ring blocks 112₀ - 112ₙ (or more precisely to the multiplexers), to reset the bistable ring 102 to a predefined state (e.g., via the reset bits), to sample a state of the bistable ring between two immediate subsequent inverter stages of the course of the bistable ring at a sampling time (e.g., with the sampler 130), and to provide the sampled state of the bistable ring as response of the bistable ring 102 to the challenge bits.

For example, a challenge comprising 10, 50, 100, 200, 300, 500, 1000 or even more challenge bits can be provided from an external instance, e.g., a manufacturer or user of the PUF, to the PUF 100. The PUF 100 can apply the challenge bits to the multiplexers and provide a response of the bistable ring 102 to the challenge bits as response of the PUF 100 to the challenge. Note that the response may comprise only two states, e.g., described by one bit (or three states, as will become clear from the discussion below). Moreover, the manufacturer of the PUF 100 may have database having stored several CRPs (Challenge Response Pairs) of the PUF 100. Thus, by applying a known challenge to the PUF 100 and comparing the response of the PUF 100 with the response stored in the database of the manufacturer, it can be verified that the PUF 100, or a device comprising the PUF, is authentic.

Fig. 12 shows a block diagram of a PUF 100 according to a further embodiment of the present invention. In other words, Fig. 12 shows a possible architecture of the twisted bistable ring PUFs 100 on the basis of NOR gates. However, NAND gates could also be used as inverter stages 104₀ - 104₂ₙ₊₁. Thereby, implementations are feasible both on ASICs and on FPGAs.

The PUF 100 according to the concept of the present invention may be used for authenticating a chip by verifying it while using previously collected, random challenge-response pairs.

In addition, this module may be used for generating device-specific bits which may serve as identities or secret keys for CMOS chips which do not comprise non-volatile memories.

Fig. 13a shows in a diagram the distribution of PUFs with x % ones for a 2-bit twisted bistable ring PUF. Thereby, the ordinate denotes the number of PUFs, where the abscissa denotes % ones in PUF.

Fig. 13b shows in a diagram the distribution of PUFs with x % zeros for a 2-bit twisted bistable ring PUF. Thereby, the ordinate denotes the number of PUFs, where the abscissa denotes % zeros in PUF.

Fig. 13c shows in a diagram the distribution of PUFs with x % unsettled for a 2-bit twisted bistable ring PUF. Thereby, the ordinate denotes the number of PUFs, where the abscissa denotes % unsettled in PUF.

Fig. 14a shows in a diagram the distribution of PUFs with x % ones for a 4-bit twisted bistable ring PUF. Thereby, the ordinate denotes the number of PUFs, where the abscissa denotes % ones in PUF.

Fig. 14b shows in a diagram the distribution of PUFs with x % zeros for a 4-bit twisted bistable ring PUF. Thereby, the ordinate denotes the number of PUFs, where the abscissa denotes % zeros in PUF.

Fig. 14c shows in a diagram the distribution of PUFs with x % unsettled for a 4-bit twisted bistable ring PUF. Thereby, the ordinate denotes the number of PUFs, where the abscissa denotes % unsettled in PUF.

Fig. 15a shows in a diagram the distribution of PUFs with x % ones for a 8-bit twisted bistable ring PUF. Thereby, the ordinate denotes the number of PUFs, where the abscissa denotes % ones in PUF.

Fig. 15b shows in a diagram the distribution of PUFs with x % zeros for a 8-bit twisted bistable ring PUF. Thereby, the ordinate denotes the number of PUFs, where the abscissa denotes % zeros in PUF.

Fig. 15c shows in a diagram the distribution of PUFs with x % unsettled for a 8-bit twisted bistable ring PUF. Thereby, the ordinate denotes the number of PUFs, where the abscissa denotes % unsettled in PUF.

Simulations wherein each component has been modeled as an inverter having an individual run time show that the poor distribution of zeroes and ones (Figs. 3a to 5c) may be significantly improved by the PUF 100, as is shown in Figs. 13a - 13c.

In Figs 13a, 14a and 15a (distribution of PUFs with X% ones), the optimum value is 50%, where in Figs. 13b, 14b and 15b (distribution of PUFs with X% zeroes), the optimum value also is 50%, and where in Figs. 13c, 14c and 15c (distribution of PUFs with X% non-settled responses), the optimum is located at 0 %.

In other words, Figs. 13a, 13b, 14a, 14b, 15a and 15b show that the distribution of zeroes and ones is not flat as it is the case in the normal bistable ring PUF, but rather that most PUFs approach the optimum of 50 %. Moreover, Figs. 13c, 14c, and 15c show how many challenges of one PUF oscillated longer than the simulation time and thus provided either zero nor one.

Additionally, it has been found that as the size of the ring increases, the behavior becomes increasingly nonlinear. As a result, both the learnability by means of mechanical learning methods is made more difficult and improved distribution for the generated bits is provided if the PUF is used for key generation.

In other words, the PUF 100 comprises a pronounced nonlinear behavior and a good distribution of responses. In this manner, modeling by means of statistical methods and/or mechanical learning methods is to be prevented.

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus. Some or all of the method steps may be executed by (or using) a hardware apparatus, like for example, a microprocessor, a programmable computer or an electronic circuit. In some embodiments, some one or more of the most important method steps may be executed by such an apparatus.

Depending on certain implementation requirements, embodiments of the invention can be implemented in hardware or in software. The implementation can be performed using a digital storage medium, for example a floppy disk, a DVD, a Blu-Ray, a CD, a ROM, a PROM, an EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may for example be stored on a machine readable carrier.

Other embodiments comprise the computer program for performing one of the methods described herein, stored on a machine readable carrier.

In other words, an embodiment of the inventive method is, therefore, a computer program having a program code for performing one of the methods described herein, when the computer program runs on a computer.

A further embodiment of the inventive methods is, therefore, a data carrier (or a digital storage medium, or a computer-readable medium) comprising, recorded thereon, the computer program for performing one of the methods described herein. The data carrier, the digital storage medium or the recorded medium are typically tangible and/or non-transitionary.

A further embodiment of the inventive method is, therefore, a data stream or a sequence of signals representing the computer program for performing one of the methods described herein. The data stream or the sequence of signals may for example be configured to be transferred via a data communication connection, for example via the Internet.

A further embodiment comprises a processing means, for example a computer, or a programmable logic device, configured to or adapted to perform one of the methods described herein.

A further embodiment comprises a computer having installed thereon the computer program for performing one of the methods described herein.

A further embodiment according to the invention comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

The above described embodiments are merely illustrative for the principles of the present invention. It is understood that modifications and variations of the arrangements and the details described herein will be apparent to others skilled in the art. It is the intent, therefore, to be limited only by the scope of the impending patent claims and not by the specific details presented by way of description and explanation of the embodiments herein.

## Claims

1. PUF (100) comprising a bistable ring (102) of a plurality of inverter stages (104₀ - 104₂ₙ₊₁), wherein the bistable ring (102) comprises multiplexers (106) interspersed between the inverter stages (104₀ - 104₂ₙ₊₁), wherein the PUF (100) is configured to change, in dependence on challenge bits (c₀ - c₁) applied to the multiplexers (106), a course (108) of the bistable ring (102) along which the inverter stages (104₀ - 104₂ₙ₊₁) are serially connected via the multiplexers (106) wherein, independent from the challenge bits (c₀ - c₁) applied to the multiplexers (106), each of the plurality of inverter stages (104₀ - 104₂ₙ₊₁) is connected into the course (108) of the bistable ring (102).

2. PUF (100) according to claim 1, wherein the PUF (100) comprises an even number of inverter stages (104₀ - 104₂ₙ₊₁).

3. PUF (100) according to one of the claims 1 or 2, wherein the plurality of inverter stages (104₀ - 104₂ₙ₊₁) are grouped into a plurality of ring units (110₀ - 110ₙ) each ring unit comprising one inverter stage of a first half of the plurality of inverter stages (104₀ - 104₂ₙ₊₁) and one inverter stage of a second half of the plurality of inverter stages (104₀ - 104₂ₙ₊₁), wherein the PUF (100) is configured to change, in dependence on the challenge bits (c₀ - c₁) applied to the multiplexers (106), the course (108) of the bistable ring (102) such that irrespective of the challenge bits (c₀ - c₁) applied to the multiplexers (106), a forward path (109₁) of the course (108) sequentially passes the ring units (110₀ - 110ₙ) in a forward order and a backward path (109₂) of the course (108) sequentially passes the ring units (110₀ - 110ₙ) in a backward order opposite to the forward order, and such that the challenge bits (c₀ - c₁) applied to the multiplexers (106) determine for each ring unit whether the forward path (109₁) of the course (108) passes through the inverter stage of the first half and the backward path (109₂) of the course (108) passes through the inverter stage of the second half, or whether the forward path (109₁) of the course (108) passes through the inverter stage of the second half and the backward path (109₂) of the course (108) passes through the inverter stage of the first half.

4. PUF (100) according to one of the claims 1 to 3, wherein each inverter stage comprises a first input, a second input and an output, wherein the PUF (100) is configured to connect the inverter stages (104₀ - 104₂ₙ₊₁) into the course (108) of the ring (102) by serially connecting the first inputs and the outputs of the inverter stages (104₀ - 104₂ₙ₊₁), and wherein the PUF (100) is configured to reset the bistable ring (102) by applying reset bits (R₀ - Rₙ) to the second inputs of the inverter stages (104₀ - 104₂ₙ₊₁).

5. PUF (100) according to claim 4, wherein the PUF (100) is configured to apply reset bits (R₀ - Rₙ) having the same value to the second inputs of at least two immediate subsequent inverter stages of the course (108) of the bistable ring (102).

6. PUF (100) according to one of the claims 1 to 4, wherein the inverter stages (104₀ - 104₂ₙ₊₁) are NOR or NAND gates.

7. PUF (100) according to one of the claims 1 to 6, wherein the PUF (100) comprises an external interface (132) for receiving the challenge bits (c₀ - c₁).

8. PUF (100) according to one of the claims 1 to 7, wherein the PUF (100) comprises a sampler (130) for sampling a state of the bistable ring (102) between two inverter stages of the course (108) of the bistable ring (102) at a sampling time, in order to obtain a response of the bistable ring (102) to the challenge bits (c₀ - c₁).

9. PUF (100) according to claim 8, wherein the PUF (100) is configured to adjust the sampling time such that the bistable ring (102) adopts at the sampling time in dependence on the challenge bits (c₀ - c₁) one out of three possible states, wherein the three possible states comprises a first logic state, a second logic state different from the first logic state and an oscillation state.

10. PUF (100) according to claim 9, wherein the PUF (100) is configured to adjust the sampling time such that the three possible states which the bistable ring (102) can adopt at the sampling time are distributed uniformly for all possible values of the challenge bits (c₀ - c₁).

11. PUF (100) according to one of the claims 1 to 10, wherein the PUF (100) is configured to
apply the challenge bits (c₀ - c₁) to the multiplexers (106);
reset the bistable ring (102) to a predefined state;
sample a state of the bistable ring (102) between two immediate subsequent inverter stages of the course (108) of the bistable ring (102) at a sampling time; and
provide the sampled state of the bistable ring (102) as response of the bistable ring (102) to the challenge bits (c₀ - c₁);
in order to obtain a response of the bistable ring (102) to the challenge bits (c₀ - c₁).

12. Method for obtaining a response from a PUF to a challenge comprising challenge bits, wherein the PUF comprises a bistable ring of a plurality of inverter stages, wherein the bistable ring comprises multiplexers interspersed between the inverter stages, wherein the PUF is configured to change, in dependence on the challenge bits applied to the multiplexers, a course of the bistable ring along which the inverter stages are serially connected via the multiplexers, wherein, independent from the challenge bits applied to the multiplexers, each of the plurality of inverter stages is connected into the course of the bistable ring, wherein the method comprises:
providing the plurality of challenge bits to the PUF;
initiating an oscillation of the bistable ring;
sampling a state of the bistable ring between two immediate subsequent inverter stages of the course of the bistable ring at a sampling time; and
providing the sampled state of the bistable ring as response of the bistable ring to the challenge bits.

13. Computer program having a program code for performing, when running on a computer or microprocessor, a method according to claim 12.

## Patentansprüche

1. Eine PUF (100), die einen bistabilen Ring (102) einer Mehrzahl von Inverterstufen (104₀ - 104₂ₙ₊₁) aufweist, wobei der bistabile Ring (102) Multiplexer (106) aufweist, die zwischen die Inverterstufen (104₀ - 104₂ₙ₊₁) eingestreut sind, wobei die PUF (100) konfiguriert ist, um abhängig von Herausforderungsbits (c₀ - c₁), die an die Multiplexer (106) angelegt sind, einen Verlauf (108) des bistabilen Rings (102) zu ändern, entlang dem die Inverterstufen (104₀ - 104₂ₙ₊₁) über die Multiplexer (106) in Reihe geschaltet sind,
wobei unabhängig von den Herausforderungsbits (c₀ - c₁), die an die Multiplexer (106) angelegt sind, jede der Mehrzahl von Inverterstufen (104₀ - 104₂ₙ₊₁) in den Verlauf (108) des bistabilen Rings (102) geschaltet ist.

2. PUF (100) gemäß Anspruch 1, wobei die PUF (100) eine gerade Anzahl von Inverterstufen (104₀ - 104₂ₙ₊₁) aufweist.

3. PUF (100) gemäß einem der Ansprüche 1 oder 2, bei der die Mehrzahl von Inverterstufen (104₀ - 104₂ₙ₊₁) in eine Mehrzahl von Ringeinheiten (110₀ - 110ₙ) gruppiert ist, wobei jede Ringeinheit eine Inverterstufe einer ersten Hälfte der Mehrzahl von Inverterstufen (104₀ - 104₂ₙ₊₁) und eine Inverterstufe einer zweiten Hälfte der Mehrzahl von Inverterstufen (104₀ - 104₂ₙ₊₁) aufweist, wobei die PUF (100) konfiguriert ist, um abhängig von den Herausforderungsbits (c₀ - c₁), die an die Multiplexer (106) angelegt sind, den Verlauf (108) des bistabilen Rings (102) zu ändern, sodass unabhängig von den Herausforderungsbits (c₀ - c₁), die an die Multiplexer (106) angelegt sind, ein Vorwärtsweg (109₁) des Verlaufs sequentiell durch die Ringeinheiten (110₀ - 110ₙ) verläuft in einer Vorwärtsreihenfolge, und ein Rückwärtsweg (109₂) des Verlaufs (108) sequentiell durch die Ringeinheiten (110₀ - 110ₙ) verläuft in einer Rückwärtsreihenfolge entgegengesetzt zu der Vorvdärtsreihenfolge, und sodass die Herausforderungsbits (c₀ - c₁), die an die Multiplexer (106) angelegt sind, für jede Ringeinheit bestimmen, ob der Vorwärtsweg (109₁) des Verlaufs (108) durch die Inverterstufe der ersten Hälfte verläuft und der Rückwärtsweg (109₂) des Verlaufs (108) durch die Inverterstufe der zweiten Hälfte verläuft, oder ob der Vorwärtsweg (109₁) des Verlaufs (108) durch die Inverterstufe der zweiten Hälfte verläuft und der Rückwärtsweg (109₂) des Verlaufs (108) durch die Inverterstufe der ersten Hälfte verläuft.

4. PUF (100) gemäß einem der Ansprüche 1 bis 3, bei der jede Inverterstufe einen ersten Eingang, einen zweiten Eingang und einen Ausgang aufweist, wobei die PUF (100) konfiguriert ist, um die Inverterstufen (104₀ - 104₂ₙ₊₁) in den Verlauf (108) des Rings (102) zu schalten durch Schalten der ersten Eingänge und der Ausgänge der Inverterstufen (104₀ - 104₂ₙ₊₁) in Reihe, und wobei die PUF (100) konfiguriert ist, um den bistabilen Ring (102) zurückzusetzen durch Anlegen von Rücksetzbits (R₀ - Rₙ) an die zweiten Eingänge der Inverterstufen (104₀ - 104₂ₙ₊₁).

5. PUF (100) gemäß Anspruch 4, wobei die PUF (100) konfiguriert ist, um Rücksetzbits (R₀ - Rₙ), die den gleichen Wert aufweisen, an die zweiten Eingänge von zumindest zwei unmittelbar nachfolgenden Inverterstufen des Verlaufs (108) des bistabilen Rings (102) anzulegen.

6. PUF (100) gemäß einem der Ansprüche 1 bis 4, bei der die Inverterstufen (104₀ - 104₂ₙ₊₁) NOR- oder NAND-Gatter sind.

7. PUF (100) gemäß einem der Ansprüche 1 bis 6, wobei die PUF (100) eine externe Schnittstelle (132) zum Empfangen der Herausforderungsbits (c₀ - c₁) aufweist.

8. PUF (100) gemäß einem der Ansprüche 1 bis 7, wobei die PUF (100) einen Abtaster (130) aufweist zum Abtasten eines Zustands des bistabilen Rings (102) zwischen zwei Inverterstufen des Verlaufs (108) des bistabilen Rings (102) zu einer Abtastzeit, um eine Antwort des bistabilen Rings (102) auf die Herausforderungsbits (c₀ - c₁) zu erhalten.

9. PUF (100) gemäß Anspruch 8, wobei die PUF (100) konfiguriert ist, um die Abtastzeit einzustellen, sodass der bistabile Ring (102) zu der Abtastzeit in Abhängigkeit von den Herausforderungsbits (c₀ - c₁) einen von drei möglichen Zuständen ansnimmt, wobei die drei möglichen Zustände einen ersten Logikzustand, einen zweiten Logikzustand, der sich von dem ersten Logikzustand unterscheidet, und einen Oszillationszustand aufweisen.

10. PUF (100) gemäß Anspruch 9, wobei die PUF (100) konfiguriert ist, um die Abtastzeit einzustellen, sodass die drei möglichen Zustände, die der bistabile Ring (102) zu der Abtastzeit annehmen kann, für alle möglichen Werte der Herausforderungsbits (c₀ - c₁) einheitlich verteilt sind.

11. PUF (100) gemäß einem der Ansprüche 1 bis 10, wobei die PUF (100) konfiguriert ist zum
Anlegen der Herausforderungsbits (c₀ - c₁) an die Multiplexer (106);
Rücksetzen des bistabilen Rings (102) auf einen vordefinierten Zustand;
Abtasten eines Zustands des bistabilen Rings (102) zwischen zwei unmittelbar nachfolgenden Inverterstufen des Verlaufs (108) des bistabilen Rings (102) zu einer Abtastzeit; und
Bereitstellen des abgetasteten Zustands des bistabilen Rings (102) als Antwort des bistabilen Rings (102) auf die Herausforderungsbits (c₀ - c₁);
um eine Antwort des bistabilen Rings (102) auf die Herausforderungsbits (c₀ - c₁) zu erhalten.

12. Verfahren zum Erhalten einer Antwort von einer PUF auf eine Herausforderung, die Herausforderungsbits aufweist, wobei die PUF einen bistabilen Ring einer Mehrzahl von Inverterstufen aufweist, wobei der bistabile Ring Multiplexer aufweist, die zwischen die Inverterstufen eingestreut sind, wobei die PUF konfiguriert ist, um abhängig von den Herausforderungsbits, die an die Multiplexer angelegt sind, einen Verlauf des bistabilen Rings zu ändern, entlang dem die Inverterstufen über die Multiplexer in Reihe geschaltet sind, wobei unabhängig von den Herausforderungsbits, die an die Multiplexer angelegt sind, jede der Mehrzahl von Inverterstufen in den Verlauf des bistabilen Rings geschaltet ist, wobei das Verfahren folgende Schritte aufweist:
Bereitstellen der Mehrzahl von Herausforderungsbits an die PUF;
Initiieren einer Oszillation des bistabilen Rings;
Abtasten eines Zustands des bistabilen Rings zwischen zwei unmittelbar nachfolgenden Inverterstufen des Verlaufs des bistabilen Rings zu einer Abtastzeit; und Bereitstellen des abgetasteten Zustands des bistabilen Rings als Antwort des bistabilen Rings auf die Herausforderungsbits.

13. Computerprogramm mit einem Programmcode zum Durchführen, wenn dasselbe auf einem Computer oder Mikroprozessor läuft, eines Verfahrens gemäß Anspruch 12.

## Revendications

1. Fonction physique inclonable (FPI) (100), comprenant un anneau bistable (102) d'une pluralité d'étages inverseurs (104₀ à 1042ₙ₊₁), dans laquelle l'anneau bistable (102) comprend des multiplexeurs (106) intercalés entre les étages inverseurs (104₀ à 104₂ₙ₊₁), dans laquelle la FPI (100) est configurée pour modifier, en fonction des bits de défi (co à c₁) appliqués aux multiplexeurs (106), une course (108) de la bague bistable (102) le long de laquelle les étages inverseurs (104₀ à 104₂ₙ₊₁) sont connectés en série par l'intermédiaire des multiplexeurs (106),
dans laquelle, indépendamment des bits de défi (c₀ à c₁) appliqués aux multiplexeurs (106), chacun de la pluralité d'étages inverseurs (104₀ à 104₂ₙ₊₁) est connecté à la course (108) de l'anneau bistable (102).

2. FPI (100) selon la revendication 1, dans laquelle la FPI (100) comprend un nombre pair d'étages inverseurs (104₀ - 104₂ₙ₊₁).

3. FPI (100) selon l'une des revendications 1 ou 2, dans laquelle la pluralité d'étages inverseurs (104₀ à 104₂ₙ₊₁) sont regroupés en une pluralité d'unités d'anneau (110₀ à 110ₙ), chaque unité d'anneau comprenant un étage inverseur d'une première moitié de la pluralité d'étages inverseurs (104₀ à 104₂ₙ₊₁) et un étage inverseur d'une deuxième moitié de la pluralité d'étages inverseurs (104₀ à 104₂ₙ₊₁), dans laquelle la FPI (100) est configurée pour modifier, en fonction des bits de défi (c₀ à c₁) appliqués aux multiplexeurs (106), la course (108) de l'anneau bistable (102) de sorte que, indépendamment des bits de défi (c₀ à c₁) appliqués aux multiplexeurs (106), un trajet en avant (109₁) de la course (108) passe séquentiellement par les unités d'anneau (110₀ à 110n) dans un ordre en avant et un trajet en arrière (109₂) de la course (108) passe séquentiellement par les unités d'anneau (110₀ à 110ₙ) dans une ordre en arrière opposé à l'ordre en avant, et de sorte que les bits de défi (c₀ à c₁) appliqués aux multiplexers (106) déterminent, pour chaque unité d'anneau, si le trajet en avant (109₁) de la course (108) passe par l'étage inverseur de la première moitié et le chemin en arrière (109₂) de la course (108) passe par l'étage inverseur de la deuxième moitié, ou si le trajet en avant (109₁) de la course (108) passe par l'étage inverseur de la deuxième moitié et le trajet en arrière (109₂) de la course (108) passe par l'étage inverseur de la première moitié.

4. FPI (100) selon l'une des revendications 1 à 3, dans laquelle chaque étage inverseur comprend une première entrée, une deuxième entrée et une sortie, dans laquelle la FPI (100) est configurée pour connecter les étages inverseurs (104₀ à 104₂ₙ₊₁) à la course (108) de l'anneau (102) en connectant en série les premières entrées et les sorties des étages inverseurs (104₀ à 104₂ₙ₊₁), et dans laquelle la FPI (100) est configurée pour remettre à zéro l'anneau bistable (102) en appliquant des bits de remise à zéro (R₀ à Rₙ) aux deuxièmes entrées des étages inverseurs (104₀ à 104₂ₙ₊₁).

5. FPI (100) selon la revendication 4, dans laquelle la FPI (100) est configurée pour appliquer les bits de remise à zéro (R₀ à Rₙ) ayant la même valeur aux deuxièmes entrées d'au moins deux étages inverseurs immédiatement successifs de la course (108) de l'anneau bistable (102).

6. FPI (100) selon l'une des revendications 1 à 4, dans laquelle les étages inverseurs (104₀ à 104₂ₙ₊₁) sont des portes NOR ou NAND.

7. FPI (100) selon l'une des revendications 1 à 6, dans laquelle la FPI (100) comprend une interface externe (132) destinée à recevoir les bits de défi (c₀ à c₁).

8. FPI (100) selon l'une des revendications 1 à 7, dans laquelle la FPI (100) comprend un échantillonneur (130) destiné à échantillonner un état de l'anneau bistable (102) entre deux étages inverseurs de la course (108) de l'anneau bistable (102) à un moment d'échantillonnage, pour obtenir une réponse de l'anneau bistable (102) aux bits de défi (c₀ à c₁).

9. FPI (100) selon la revendication 8, dans laquelle la FPI (100) est configurée pour ajuster le moment d'échantillonnage de sorte que l'anneau bistable (102) adopte au moment d'échantillonnage, en fonction des bits de défi (c₀ à c₁), l'un de trois états possibles, dans laquelle les trois états possibles comprennent un premier état logique, un deuxième état logique différent du premier état logique et un état d'oscillation.

10. FPI (100) selon la revendication 9, dans laquelle la FPI (100) est configurée pour ajuster le moment d'échantillonnage de sorte que les trois états possibles que le noyau bistable (102) peut adopter au moment d'échantillonnage soient distribués de manière uniforme pour toutes les valeurs possibles des bits de défi (c₀ à c₁).

11. FPI (100) selon l'une des revendications 1 à 10, dans laquelle la FPI (100) est configurée pour
appliquer les bits de défi (c₀ à c₁) aux multiplexeurs (106);
remettre l'anneau bistable (102) à un état prédéfini;
échantillonner un état de l'anneau bistable (102) entre deux étages inverseurs immédiatement successifs de la course (108) de l'anneau bistable (102) à un moment d'échantillonnage; et
fournir l'état échantillonné de l'anneau bistable (102) comme réponse de l'anneau bistable (102) aux bits de défi (c₀ à c₁);
pour obtenir une réponse de l'anneau bistable (102) aux bits de défi (c₀ à c₁).

12. Procédé pour obtenir une réponse d'une FPI à un défi comprenant des bits de défi, dans lequel la FPI comprend un anneau bistable d'une pluralité d'étages inverseurs, dans lequel l'anneau bistable comprend des multiplexeurs intercalés entre les étages inverseurs, dans lequel la FPI est configurée pour modifier, en fonction des bits de défi appliqués aux multiplexeurs, une course de l'anneau bistable le long de laquelle les étages inverseurs sont connectés en série par l'intermédiaire des multiplexeurs, dans lequel, indépendamment des bits de défi appliqués aux multiplexeurs, chacun de la pluralité d'étages inverseurs est connecté à la course de l'anneau bistable, dans lequel le procédé comprend le fait de:
fournir la pluralité de bits de défi à la FPI;
initier une oscillation de la bague bistable;
échantillonner un état de l'anneau bistable entre deux étages inverseurs immédiatement successifs de la course de l'anneau bistable à un moment d'échantillonnage; et
fournir l'état échantillonné de l'anneau bistable comme réponse de l'anneau bistable aux bits de défi.

13. Programme d'ordinateur présentant un code de programme pour réaliser, lorsqu'il est exécuté sur un ordinateur ou un microprocesseur, un procédé selon la revendication 12.
